(19) Europäisches Patentamt
European Patent Office
Office européen des brevets

(11) **EP 4 734 516 A1**

(12) **EUROPEAN PATENT APPLICATION**
published in accordance with Art. 153(4) EPC

(43) Date of publication:
**29.04.2026 Bulletin 2026/18**

(21) Application number: **24826264.4**

(22) Date of filing: **20.06.2024**

(51) International Patent Classification (IPC):
**H04N 19/593** $^{(2014.01)}$     **H04N 19/186** $^{(2014.01)}$
**H04N 19/88** $^{(2014.01)}$      **H04N 19/70** $^{(2014.01)}$
**H04N 19/132** $^{(2014.01)}$     **H04N 19/11** $^{(2014.01)}$
**H04N 19/105** $^{(2014.01)}$

(52) Cooperative Patent Classification (CPC):
**H04N 19/105; H04N 19/11; H04N 19/132;**
**H04N 19/186; H04N 19/593; H04N 19/70;**
**H04N 19/88**

(86) International application number:
**PCT/KR2024/008521**

(87) International publication number:
**WO 2024/262949 (26.12.2024 Gazette 2024/52)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  20.06.2023  KR 20230079190
               30.06.2023  KR 20230085249

(71) Applicant: **LG Electronics Inc.**
**Yeongdeungpo-gu**
**Seoul 07336 (KR)**

(72) Inventors:
• **HONG, Myungoh**
  **Seoul 06772 (KR)**
• **PARK, Nae Ri**
  **Seoul 06772 (KR)**
• **LIM, Jaehyun**
  **Seoul 06772 (KR)**
• **CHOI, Jangwon**
  **Seoul 06772 (KR)**
• **JANG, Hyeong Moon**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **INTRA PREDICTION-BASED IMAGE ENCODING/DECODING METHOD AND DEVICE, AND RECORDING MEDIUM FOR STORING BITSTREAM**

(57)    An image encoding/decoding method and device are provided. The image decoding method according to the present disclosure may comprise the steps of: configuring a block vector candidate list for a current chroma block; rearranging the block vector candidate list; obtaining a block vector candidate index indicating one candidate block vector included in the rearrange block vector candidate list; and generating a final prediction block of the current chroma block by performing intra prediction based on the candidate block vector indicated by the block vector candidate index, wherein the block vector candidate list may be configured based on a block vector of a luma block corresponding to the current chroma block or a block vector of a neighboring block of the current chroma block.

FIG. 23

```
                    START
                      │
                      ▼
     ┌──────────────────────────────────────┐  S2310
     │  GENERATE BLOCK VECTOR CANDIDATE LIST │
     └──────────────────────────────────────┘
                      │
                      ▼
     ┌──────────────────────────────────────┐  S2330
     │ REARRANGE BLOCK VECTOR CANDIDATE LIST │
     └──────────────────────────────────────┘
                      │
                      ▼
     ┌──────────────────────────────────────┐  S2350
     │  ACQUIRE BLOCK VECTOR CANDIDATE INDEX │
     └──────────────────────────────────────┘
                      │
                      ▼
     ┌──────────────────────────────────────┐  S2370
     │    GENERATE FINAL PREDICTION BLOCK    │
     └──────────────────────────────────────┘
                      │
                      ▼
                     END
```

## Description

[Technical Field]

The present disclosure relates to an image encoding/decoding method and device and a recording medium storing a bitstream, and more particularly, to an image encoding/decoding method and device based on intra prediction and a recording medium storing a bitstream generated using an image encoding method/device of the present disclosure.

[Background]

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

[Disclosure]

[Technical Problem]

The present disclosure is directed to providing an image encoding/decoding method and apparatus with improved encoding/decoding efficiency.

The present disclosure is also directed to providing an image encoding/decoding method and apparatus for effectively performing intra prediction.

The present disclosure is also directed to providing an image encoding/decoding method and apparatus for effectively performing chroma prediction by utilizing block vector (BV) information.

The present disclosure is also directed to providing a non-transitory computer-readable recording medium for storing a bitstream generated using an image encoding method or apparatus in accordance with the present disclosure.

The present disclosure is also directed to providing a non-transitory computer-readable recording medium for storing a bitstream that is received and decoded by an image decoding apparatus according to the present disclosure and used for image reconstruction.

The present disclosure is also directed to providing a method of transmitting a bitstream generated using an image encoding method or apparatus according to the present disclosure.

Technical objects to be achieved in the present disclosure are not limited to those described above, and other technical objects that have not been described above will be clearly understood by those skilled in the technical field to which the present disclosure pertains from the following description.

[Technical Solution]

According to an embodiment of the present disclosure, an image decoding method performed by an image decoding apparatus includes: generating a block vector (BV) candidate list for a current chroma block, rearranging the BV candidate list, acquiring a BV candidate index indicating one candidate BV included in the rearranged BV candidate list, and generating a final prediction block of the current chroma block by performing intra prediction based on the candidate BV indicated by the BV candidate index. The BV candidate list is generated based on a BV of a luma block corresponding to the current chroma block or a BV of a neighboring block of the current chroma block.

According to the embodiment of the present disclosure, the BV candidate list may be generated by adding one or more luma BVs included in one or more corresponding luma blocks corresponding to the current chroma block in a predetermined order.

According to the embodiment of the present disclosure, the luma BVs may be included in the BV candidate list based on a predetermined threshold.

According to the embodiment of the present disclosure, candidate BVs included in the BV candidate list may be values acquired by scaling the luma BVs.

According to the embodiment of the present disclosure, the image decoding method may further include correcting the candidate BV in response to the candidate BV being $(Vx>>1, Vy>>1)$ based on template cost comparison of $(Vx>>1, Vy>>1)$, $((Vx+1)>>1, Vy>>1)$, $(Vx>>1, (Vy+1)>>1)$, and $((Vx+1)>>1, (Vy+1)>>1)$.

According to the embodiment of the present disclosure, the rearranging of the BV candidate list may be performed based on template costs, and the template costs may be calculated based on a template area of the current chroma block and a template area of a reference block indicated by the candidate BV.

According to the embodiment of the present disclosure, the BV candidate index may include at least one of a first index and a second index, and the generating of the final prediction block may include generating a first prediction block of the current chroma block based on a first candidate BV indicated by the first index, generating a second prediction block of the current chroma block based on a second candidate BV indicated by the second index, and generating the final prediction block by calculating a weighted sum of the first prediction block and the second prediction block.

According to the embodiment of the present disclosure, the generating of the final prediction block may include generating a first prediction block of the current chroma block based on the candidate BV indicated by the BV candidate index, generating a second prediction block of the current chroma block based on a linear model, and generating the final prediction block by calculating a weighted sum of the first prediction block and the second prediction block.

According to another embodiment of the present disclosure, an image encoding method performed by an image encoding apparatus includes: generating a BV candidate list for a current chroma block, rearranging the BV candidate list, generating a final prediction block of the current chroma block by performing intra prediction based on one candidate BV included in the rearranged BV candidate list, and encoding a BV candidate index indicating the candidate BV used for generating the final prediction block. The BV candidate list is generated based on a BV of a luma block corresponding to the current chroma block or a BV of a neighboring block of the current chroma block.

According to another aspect of the present disclosure, a computer-readable recording medium stores a bitstream generated using an image encoding method.

According to another aspect of the present disclosure, a method of transmitting a bitstream generated using an image encoding method is provided, the image encoding method including: generating a BV candidate list for a current chroma block, rearranging the BV candidate list, generating a final prediction block of the current chroma block by performing intra prediction based on one candidate BV included in the rearranged BV candidate list, and encoding a BV candidate index indicating the candidate BV used for generating the final prediction block. The BV candidate list is generated based on a BV of a luma block corresponding to the current chroma block or a BV of a neighboring block of the current chroma block.

[Advantageous Effects]

According to the present disclosure, it is possible to provide an image encoding/decoding method and apparatus with improved encoding/decoding efficiency.

According to the present disclosure, it is also possible to provide an image encoding/decoding method and apparatus for effectively performing intra prediction.

According to the present disclosure, it is also possible to provide an image encoding/decoding method and apparatus for performing chroma prediction by utilizing block vector (BV) information.

According to the present disclosure, it is also possible to provide a non-transitory computer-readable recording medium for storing a bitstream generated using an image encoding method or apparatus in accordance with the present disclosure.

According to the present disclosure, it is also possible to provide a non-transitory computer-readable recording medium for storing a bitstream that is received and decoded by an image decoding apparatus in accordance with the present disclosure and used for image reconstruction.

According to the present disclosure, it is also possible to provide a method of transmitting a bitstream generated using an image encoding method or apparatus in accordance with the present disclosure.

Effects of the present disclosure are not limited to those described above, and other effects that have not been described above will be clearly understood by those skilled in the technical field to which the present disclosure pertains from the following description.

[Description of Drawings]

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an

FIG. 4 is a flowchart illustrating a video/image encoding method based on intra prediction.

FIG. 5 is a diagram illustrating a configuration of an intra prediction unit according to the present disclosure.

FIG. 6 is a flowchart illustrating a video/image decoding method based on intra prediction.

FIG. 7 is a diagram illustrating a configuration of an intra prediction unit according to the present disclosure.

FIG. 8 is a diagram illustrating a search area used for intra template matching prediction (intraTMP) according to an embodiment of the present disclosure.

FIG. 9 is a diagram showing a block vector (BV) in an intra block copy (IBC) mode according to an embodiment of the present disclosure.

FIG. 10 is a diagram showing a reference area in the IBC mode according to an embodiment of the present disclosure.

FIG. 11 is a diagram showing luma blocks used for direct block vector (DBV) derivation according to an embodiment of the present disclosure.

FIG. 12 is a flowchart of a method of predicting a current chroma block according to an embodiment of the present disclosure.

FIG. 13 is a diagram showing template areas of a current block and multiple reference blocks according to an embodiment of the present disclosure.

FIG. 14 is a diagram showing template areas of a current block and a reference block according to an embodiment of the present disclosure.

FIG. 15 is a diagram showing a corresponding luma block of a current chroma block according to an embodiment of the present disclosure.

FIG. 16 is a diagram showing neighboring areas of a current chroma block according to an embodiment of the present disclosure.

FIG. 17 is a diagram showing candidate BVs according to an embodiment of the present disclosure.

FIG. 18 is a diagram showing a template area outside a boundary according to an embodiment of the present disclosure.

FIG. 19 is a diagram showing a corresponding luma block according to an embodiment of the present disclosure.

FIG. 20 is a diagram showing template areas according to an embodiment of the present disclosure.

FIG. 21 is a diagram showing luma block search locations according to an embodiment of the present disclosure.

FIG. 22 is a flowchart of an encoding method according to an embodiment of the present disclosure.

FIG. 23 is a flowchart of a decoding method according to an embodiment of the present disclosure.

FIG. 24 is a view showing a content streaming system to which an embodiment of the present disclosure is applicable.

[Modes of the Invention]

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In this disclosure, "video" may refer to a collection of images in sequence over time.

In the present disclosure, a "picture" generally refers to a unit representing one image at a specific time, and a slice/tile is a coding unit constituting a portion of a picture, and a picture may be composed of one or more slices/tiles. In addition, a slice/tile may include one or more coding tree units (CTUs).

A "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with the terms such as "sample array", "block" or "area" in some cases. In a general case, an $M \times N$ block may include a set (or array) of samples (or a sample array) or transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, "or" may be interpreted as "and/or." For example, "A or B" may mean 1) only "A," 2) only "B," or 3) "A and B." Alternatively, in the present disclosure, "or" may mean "additionally or alternatively."

In the present disclosure, "at least one of A, B, and C" may mean "only A," "only B," "only C," or "any combination of A, B, and C." Also, "at least one of A, B, or C" or "at least one of A, B, and/or C" may mean "at least one of A, B, and C."

Parentheses used in the present disclosure may mean "for instance." For example, when there is the phrase "prediction (intra prediction)," "intra prediction" may have been proposed as an example of "prediction." In other words, "prediction" in the present disclosure may not be limited to "intra prediction," and "intra prediction" may have been proposed as an example of "prediction." In addition, when there is the phrase "prediction (i.e., intra prediction)," "intra prediction" may have been proposed as an example of "prediction."

Overview of video **coding** system

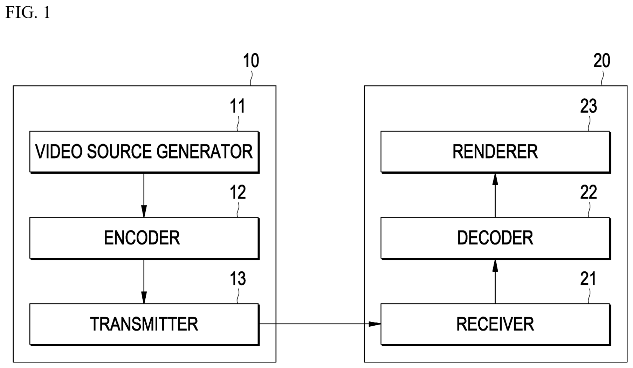

FIG. 1 is a view showing a video coding system to which an embodiment of the present disclosure is applicable.

The video coding system according to an embodiment may include an encoding device 10 and a decoding device 20. The encoding device 10 may deliver encoded video and/or image information or data to the decoding device 20 in the form of a file or streaming via a digital storage medium or network.

The encoding device 10 according to an embodiment may include a video source generator 11, an encoding unit(encoder) 12 and a transmitter 13. The decoding device 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may obtain a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that obtains encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

## Overview of image encoding apparatus

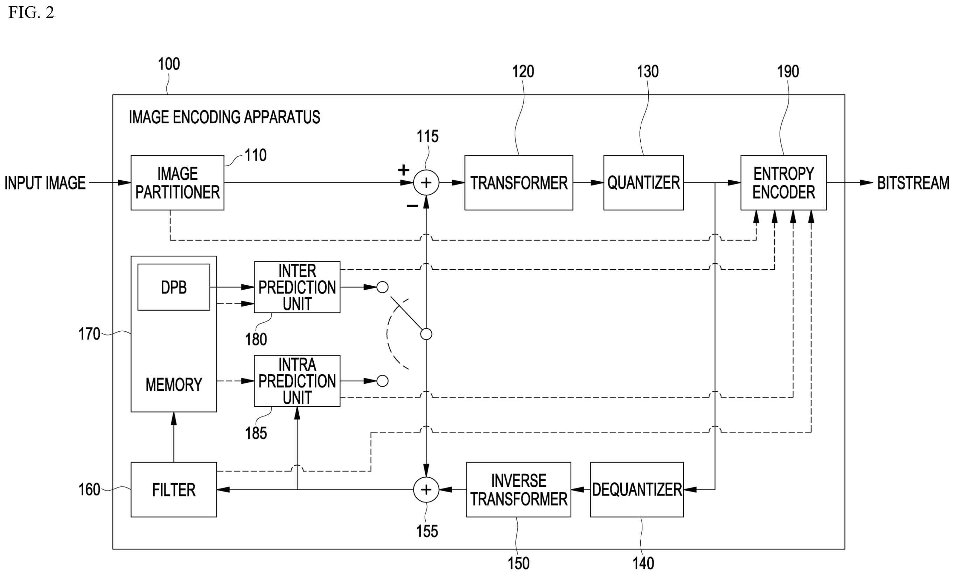

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be obtained by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth obtained by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks,

EP 4 734 516 A1

subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform obtained based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may

7

include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

Meanwhile, LMCS (luma mapping with chroma scaling) may be applied during the picture encoding and/or restoration process.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

## Overview of image decoding apparatus

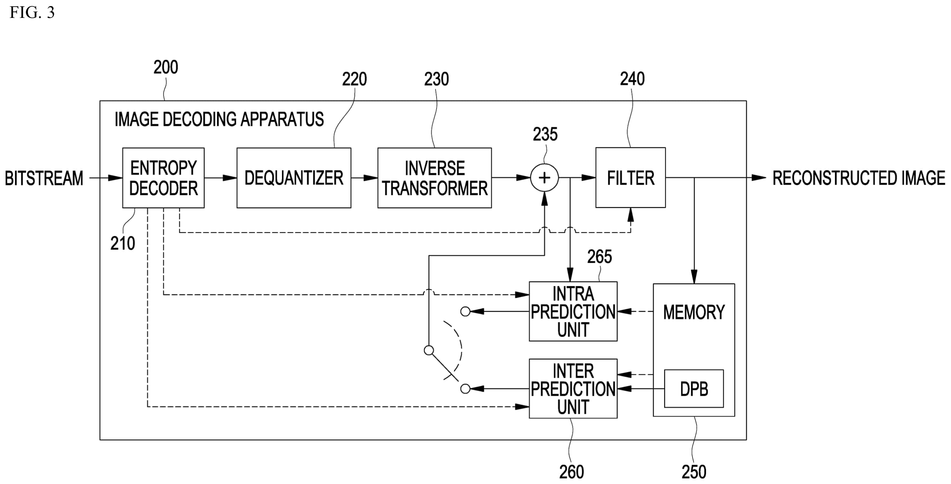

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be obtained by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

## Overview of intra prediction

Intra prediction according to the present disclosure will be described below.

Intra prediction may refer to prediction of generating prediction samples of a current block based on reference samples within a picture to which the current block belongs (hereinafter, "current picture"). When intra prediction is applied to the current block, neighboring reference samples to be used for intra prediction of the current block may be derived. The neighboring reference samples of the current block may include a total of $2 \times nH$ samples that are adjacent to a left boundary of the current block with a size of $nW \times nH$ or neighbor on a bottom-left side, a total of $2 \times nW$ samples that are adjacent to a top boundary of the current block or neighbor on a top-right side, and one sample neighboring on a top-left side of the current block. Alternatively, neighboring reference samples of the current block may include top neighboring samples of a plurality of columns and left neighboring samples of a plurality of rows. In addition, the neighboring reference samples of the current block may include a total of $nH$ samples adjacent to a right boundary of the current block with a size of $nW \times nH$, a total of $nW$ samples adjacent to a bottom boundary of the current block, and one sample neighboring a bottom-right side of the current block.

However, some of the neighboring reference samples of the current block may not have been decoded yet or may be unusable. In this case, a decoder may construct neighboring reference samples which will be used for prediction by substituting the unusable samples with usable samples. Alternatively, the decoder may construct neighboring reference samples which will be used for prediction through interpolation of usable samples.

When neighboring reference samples are derived, (i) a prediction sample may be derived based on an average of the neighboring reference samples of the current block or interpolation based on the neighboring reference samples, or (ii) the prediction sample may be derived based on a reference sample that exists in a specific (prediction) direction from a prediction sample among the neighboring reference samples of the current block. The case of (i) may be referred to as a non-directional mode or non-angular mode, and the case of (ii) may be referred to as a directional mode or an angular mode.

Also, the prediction sample may be generated through interpolation between a first neighboring sample located in a prediction direction of an intra prediction mode of the current block based on a prediction-target sample of the current block and a second neighboring sample located in the opposite direction thereto among the neighboring reference samples. The above case may be referred to as linear interpolation intra prediction (LIP).

Also, chroma prediction samples may be generated based on luma samples using a linear model (LM). This case may be referred to as LM mode.

Also, a temporary prediction sample of the current block may be derived based on filtered neighboring reference samples, and a weighted sum of the existing neighboring reference samples, that is, at least one reference sample derived in accordance with the intra prediction mode among unfiltered neighboring reference samples and the temporary prediction sample, may be calculated to derive a prediction sample of the current block. This case may be referred to as position dependent intra prediction (PDPC).

Also, a reference sample line with the highest prediction accuracy may be selected from multiple reference sample lines neighboring on the current block, and a reference sample which exists in a prediction direction from the selected reference sample line may be used to derive a prediction sample. Here, information on the used reference sample line (e.g., intra_luma_ref_idx) may be encoded in a bitstream and signaled. This case may be referred to as multi-reference line intra prediction (MRL) or MRL-based intra prediction. When MRL is not applied, reference samples may be derived from a reference sample line directly adjacent to the current block, and in this case, information on the reference sample line may not be signaled.

Also, the current block may be divided into vertical or horizontal sub-partitions, and intra prediction may be performed on each sub-partition based on the same intra prediction mode. Here, neighboring reference samples of intra prediction may be derived for each of the sub-partitions. In other words, a reconstructed sample of a previous sub-partition in terms of an encoding/decoding sequence may be used as a neighboring reference sample of a current sub-partition. In this case, an intra prediction mode of the current block may be uniformly applied to the sub-partitions, and neighboring reference samples may be derived and used for each of the sub-partitions such that intra prediction performance can be improved in some cases. This prediction method may be referred to as intra sub-partition (ISP) or ISP-based intra prediction.

The above-described intra prediction methods may be referred to as intra prediction types, additive intra prediction modes, etc., distinguishably from directional or non-directional intra prediction modes. For example, the intra prediction techniques (intra prediction types, additive intra prediction modes, etc.) may include at least one of the above-described LIP, LM, PDPC, MRL, and ISP. General intra prediction methods other than the specific intra prediction types such as LIP, LM, PDPC, MRL, ISP may be referred to as normal intra prediction types. The normal intra prediction types may be generally applied when those specific intra prediction types are not applied, and prediction may be performed based on the foregoing intra prediction modes. Meanwhile, post-filtering may be performed on derived prediction samples as necessary.

Specifically, an intra prediction procedure may include an intra prediction mode/type determination operation, a neighboring reference sample derivation operation, and an intra prediction mode/type-based prediction sample derivation operation. In addition, a post-filtering operation may be performed on derived prediction samples as necessary.

Meanwhile, in addition to the above-described intra prediction types, affine linear weighted intra prediction (ALWIP) may be used. ALWIP may also be referred to as linear weighted intra prediction (LWIP), matrix-weighted intra prediction (MIP), or matrix-based intra prediction (MIP). When MIP is applied to the current block, i) neighboring reference samples on which an averaging procedure has been performed may be used ii) to perform a matrix-vector-multiplication procedure, and iii) a horizontal/vertical interpolation procedure may be further performed as necessary to derive prediction samples of the current block. Intra prediction modes used for MIP may be different from intra prediction modes used in the above-described LIP, PDPC, MRL, and ISP intra prediction or intra prediction modes used in normal intra prediction. Intra prediction modes for MIP may be referred to as MIP intra prediction modes, MIP prediction modes, or MIP modes. For example, a matrix and offset used in the matrix-vector-multiplication may be set differently in accordance with an intra prediction mode for MIP. Here, the matrix may be referred to as an MIP weight matrix, and the offset may be referred to as an MIP offset vector or an MIP bias vector. A detailed MIP method will be described below.

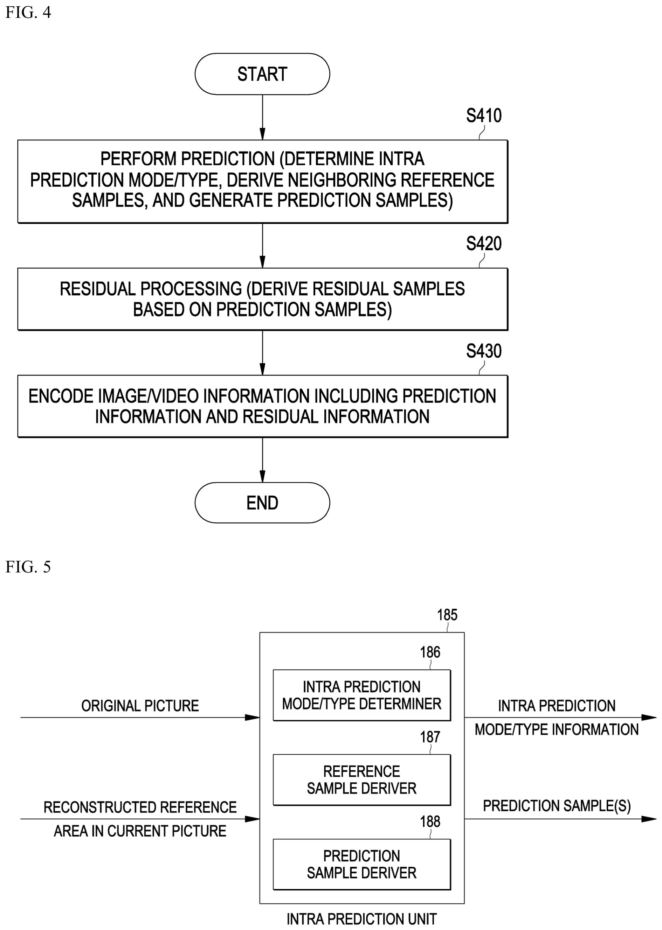

A block reconstruction procedure based on intra prediction and an intra prediction unit in an encoding apparatus will be described below with reference to FIGS. 4 and 5.

FIG. 4 is a flowchart illustrating a video/image encoding method based on intra prediction.

The encoding method of FIG. 4 may be performed by the image encoding apparatus of FIG. 2. Specifically, S410 may be performed by the intra prediction unit 185, and S420 may be performed by the residual processor. Specifically, S420 may be performed by the subtractor 115. Operation S430 may be performed by the entropy encoder 190. In operation S430, prediction information may be derived by the intra prediction unit 185, and in operation S420, residual information may be derived by the residual processor. The residual information is information on the residual samples. The residual information may include information on quantized transform coefficients for the residual samples. As described above, the residual samples may be derived as transform coefficients through the transformer 120 of the image encoding apparatus, and the transform coefficients may be derived as quantized transform coefficients through the quantizer 130. Information of the quantized transform coefficients may be encoded by the entropy encoder 190 through a residual coding procedure.

The image encoding apparatus perform intra prediction on a current block (S410). The image encoding apparatus may determine an intra prediction mode/type for the current block, derive neighboring reference samples of the current block, and generate prediction samples within the current block based on the intra prediction mode/type and the neighboring reference samples. Here, the intra prediction mode/type determination procedure, the neighboring reference sample derivation procedure, and the prediction sample generation procedure may be performed simultaneously, or any one procedure may be performed before other procedures.

FIG. 5 is a diagram illustrating a configuration of the intra prediction unit 185 according to the present disclosure.

As shown in FIG. 5, the intra prediction unit 185 of the image encoding apparatus may include an intra prediction mode/type determiner 186, a reference sample deriver 187, and a prediction sample deriver 188. The intra prediction mode/type determiner 186 may determine an intra prediction mode/type for the current block. The reference sample deriver 187 may derive neighboring reference samples of the current block. The prediction sample deriver 188 may derive prediction samples of the current block. Meanwhile, although not shown in the drawing, when a prediction sample filtering procedure which will be described below is performed, the intra prediction unit 185 may further include a prediction sample filter (not shown).

The image encoding apparatus may determine a mode/type that is applied to the current block among a plurality of intra prediction modes/types. The image encoding apparatus may compare rate-distortion (RD) costs of the intra prediction modes/types with each other and determine an optimal intra prediction mode/type for the current block.

Meanwhile, the image encoding apparatus may perform a prediction sample filtering procedure. Prediction sample filtering may be referred to as post filtering. Some or all of the prediction samples may be filtered through the prediction sample filtering procedure. In some cases, the prediction sample filtering procedure may be omitted.

Referring back to FIG. 4, the image encoding apparatus may generate residual samples for the current block based on the prediction samples or filtered prediction samples (S420). The image encoding apparatus may derive the residual samples by subtracting the prediction samples from original samples of the current block. In other words, the image encoding apparatus may derive the residual samples by subtracting the corresponding prediction samples from the original samples.

The image encoding apparatus may encode image information including information on the intra prediction (prediction information) and residual information of the residual samples (S430). The prediction information may include the intra prediction mode information and/or the intra prediction technique information. The image encoding apparatus may output the encoded image information in the form of a bitstream. The output bitstream may be forwarded to the image decoding apparatus via a storage medium or a network.

The residual information may include residual coding syntax which will be described below. The image encoding apparatus may derive quantized transform coefficients by transforming/quantizing the residual samples. The residual information may include information on the quantized transform coefficients.

Meanwhile, as described above, the image encoding apparatus may generate a reconstructed picture (including reconstructed samples and a reconstructed block). To this end, the image encoding apparatus may derive (modified) residual samples by dequantizing/inversely transforming the quantized transform coefficients. The reason for transforming/quantizing residual samples and then performing dequantization/inverse transform is to derive residual samples identical to those derived by the image decoding apparatus. The image encoding apparatus may generate a reconstructed block including reconstructed samples for the current block based on the prediction samples and the (modified) residual samples. A reconstructed picture for the current picture may be generated based on the reconstructed block. As described above, an in-loop filtering procedure, etc., may be further applied to the reconstructed picture.

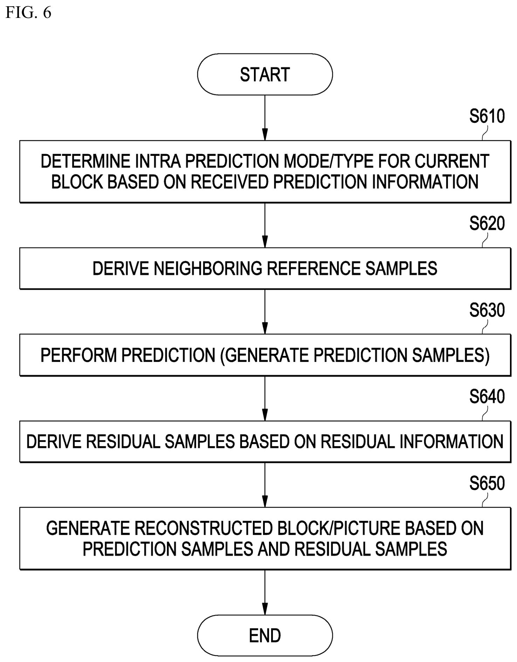

FIG. 6 is a flowchart illustrating a video/image decoding method based on intra prediction.

The image decoding apparatus may perform operations corresponding to the operations performed by the image encoding apparatus.

The decoding method of FIG. 6 may be performed by the image decoding apparatus of FIG. 3. Operations S610 to S630 may be performed by the intra prediction unit 265, and prediction information of S610 and residual information of S640 may be obtained from a bitstream by the entropy decoder 210. The residual processor of the image decoding apparatus may derive residual samples for the current block based on the residual information (S640). Specifically, the dequantizer 220 of the residual processor may derive transform coefficients by performing dequantization based on quantized transform coefficients derived from the residual information, and the inverse transformer 230 of the residual processor may derive residual samples for the current block by performing an inverse transform on the transform coefficients. Operation S650 may be performed by the adder 235 or the reconstructor.

Specifically, the image decoding apparatus may derive an intra prediction mode/type for the current block based on received prediction information (intra prediction mode/type information) (S610). Also, the image decoding apparatus may derive neighboring reference samples of the current block (S620). The image decoding apparatus may generate prediction samples within the current block based on the intra prediction mode/type and the neighboring reference samples (S630). In this case, the image decoding apparatus may perform a prediction sample filtering procedure. Prediction sample filtering may be referred to as post filtering. Some or all of the prediction samples may be filtered through the prediction sample filtering procedure. In some cases, the prediction sample filtering procedure may be omitted.

The image decoding apparatus may generate residual samples for the current block based on the received residual information (S640). The image decoding apparatus may generate reconstructed samples for the current block based on the prediction samples and the residual samples and derive a reconstructed block including the reconstructed samples (S650). A reconstructed picture for the current picture may be generated based on the reconstructed block. As described above, an in-loop filtering procedure, etc., may be further applied to the reconstructed picture.

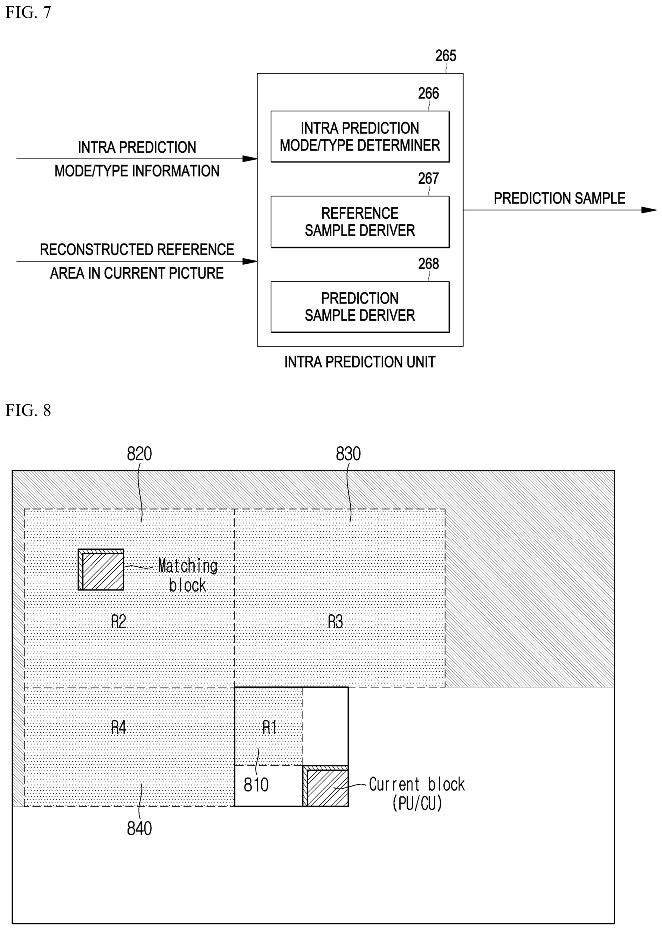

FIG. 7 is a diagram illustrating a configuration of the intra prediction unit 265 according to the present disclosure.

As shown in FIG. 7, the intra prediction unit 265 of the image decoding apparatus may include an intra prediction mode/type determiner 266, a reference sample deriver 267, and a prediction sample deriver 268. The intra prediction mode/type determiner 266 may determine an intra prediction mode/type for the current block based on the intra prediction mode/type information generated and signaled by the intra prediction mode/type determiner 186 of the image encoding apparatus, and the reference sample deriver 266 may derive the neighboring reference samples of the current block from a reconstructed reference block in a current picture. The prediction sample deriver 268 may derive the prediction samples of the current block. Meanwhile, although not shown in the drawing, when the above-described prediction sample filtering procedure is performed, the intra prediction unit 265 may further include a prediction sample filter (not shown).

The intra prediction mode information may include flag information (e.g., intra_luma_mpm_flag) indicating, for example, whether a most probable mode (MPM) or a remaining mode is applied to the current block. When the MPM is applied to the current block, the intra prediction mode information may further include index information (e.g., intra_luma_mpm_idx) indicating one of the intra prediction mode candidates (MPM candidates). The intra prediction mode candidates (MPM candidates) may constitute an MPM candidate list or an MPM list. When the MPM is not applied to the current block, the intra prediction mode information may further include remaining mode information (e.g., intra_luma_mpm_remainder) indicating one of intra prediction modes other than the intra prediction mode candidates (the MPM candidates). The image decoding apparatus may determine an intra prediction mode of the current block based on the intra prediction mode information.

In addition, the intra prediction technique information may be generated in various forms. As an example, the intra prediction technique information may include intra prediction technique index information indicating one of the intra prediction types. As another example, the intra prediction technique information may include at least one of reference sample line information (e.g., intra_luma _ref_ idx) indicating whether MRL is applied to the current block and which reference sample line is used when MRL is applied when MRL is applied, ISP flag information (e.g., intra_subpartitions_mode_flag) indicating whether ISP is applied to the current block, ISP type information (e.g., intra_subparitions_split_flag) indicating partition types of sub-partitions when ISP is applied, and flag information indicating whether PDPC is applied or flag information indicating whether LIP is applied. In addition, the intra prediction type information may include an MIP flag indicating whether MIP is applied to the current block. In the present disclosure, ISP flag information may be referred to as "ISP application indicator."

The intra prediction mode information and/or the intra prediction technique information may be encoded/decoded using a coding method described in the present document. For example, the intra prediction mode information and/or the intra prediction technique information may be encoded/decoded through entropy coding (e.g., context-adaptive binary arithmetic coding (CABAC) or context-adaptive variable-length coding (CAVLC)) based on truncated (rice) binary code.

Meanwhile, the intra prediction modes may further include cross-component linear model (CCLM) modes for chroma samples in addition to a planar mode, a direct current (DC) mode, and directional intra prediction modes. The CCLM modes may be classified as L_CCLM, T_CCLM, and LT_CCLM depending on whether left samples, top samples, or both samples are taken into consideration to derive a CCLM parameter, and may be applied to only chroma components.

For example, the intra prediction modes may be indexed as shown in table 1 below.

[Table 1]

| Intra prediction mode | Associated name |
|---|---|
| 0 | INTRA_PLANAR |
| 1 | INTRA_DC |
| 2..66 | INTRA_ANGULAR2..INTRA_ANGULAR66 |
| 81..83 | INTRA_LT_CCLM, INTRA_L_CCLM, INTRA_T_CCLM |

Meanwhile, the intra prediction types (or additive intra prediction modes, etc.) may include at least one of the above-described LIP, PDPC, MRL, ISP, and MIP. The intra prediction types may be indicated based on intra prediction type information, and the intra prediction type information may be implemented in various forms. As an example, the intra prediction type information may include intra prediction type index information indicating one of the intra prediction types. As another example, the intra prediction type information may include at least one of reference sample line information (e.g., intra_luma_ref_idx) indicating whether MRL is applied to the current block and which reference sample line is used when MRL is applied, ISP flag information (e.g., intra_subpartitions_mode_flag) indicating whether ISP is applied to the current block, ISP type information (e.g., intra_subparitions_split_flag) indicating partition types of sub-partitions when ISP is applied, and flag information indicating whether PDPC is applied or flag information indicating whether LIP is applied. In addition, the intra prediction type information may include an MIP flag (or referred to as "intra_mip_flag") indicating whether MIP is applied to the current block.

## Overview of intra template matching prediction (intraTMP)

IntraTMP may be a special intra prediction mode for copying an optimal prediction block with an L-shaped template that matches a template area of a current block, from a reconstructed part of a current picture. Within a predefined search area, the image encoding apparatus 100 may search for the most similar template to a template area of a current block in a reconstructed part of a current picture and use a corresponding block as a prediction block. Then, the image encoding apparatus 100 may signal information indicating that the IntraTMP mode is used, and the image decoding apparatus 200 may perform the same prediction operation using the signaled information.

FIG. 8 is a diagram illustrating a search area used for intraTMP according to an embodiment of the present disclosure. A prediction block may be generated by matching an L-shaped causal neighbor of a current block with another block in four predefined search areas shown in FIG. 8. The four predefined search areas may be R1 810, R2 820, R3 830, and R4 840 that are defined below.

R1(810): current CTU
-R2(820): top-left CTU
R3(830): top CTU
R4(840): left CTU

A sum of difference (SAD) may be used as a cost function. Within each area, the image decoding apparatus 200 may retrieve a template with the smallest SAD for a template area of the current block and use a corresponding block the retrieved template as a prediction block.

Dimensions (SearchRange_w and SearchRange_h) of all areas may be set in proportion to block dimensions BlkW and BlkH to perform a fixed number of SAD comparisons per pixel as shown in equation 1 below.

[Equation 1]

$$SearchRange\_w = a*BlkW$$

$$SearchRange\_h = a*BlkH$$

In expression 1, "a" is a constant for controlling the gain/complexity trade-off. For example, "a" may be 5.

To speed up the template matching process, the search ranges of all search areas may be subsampled by a factor or 2. This leads to a reduction of template matching search by 4. After an optimal match area is found, a refinement process may be performed. The refinement process may be performed through a second template matching search around the optimal match area using a reduced range. The reduced range may be defined as min(BlkW, BlkH)/2.

An intra template matching tool may be available for coding units (CUs) with a size of 64 or less in width and height. The maximum CU size for intra template matching may be configurable. In other words, the maximum CU size for intra template matching may be arbitrarily set. The intraTMP mode may be signaled at a CU level through a dedicated flag when decoder-side intra mode derivation (DIMD) is not used for a current CU.

### Intra block copy (IBC) mode

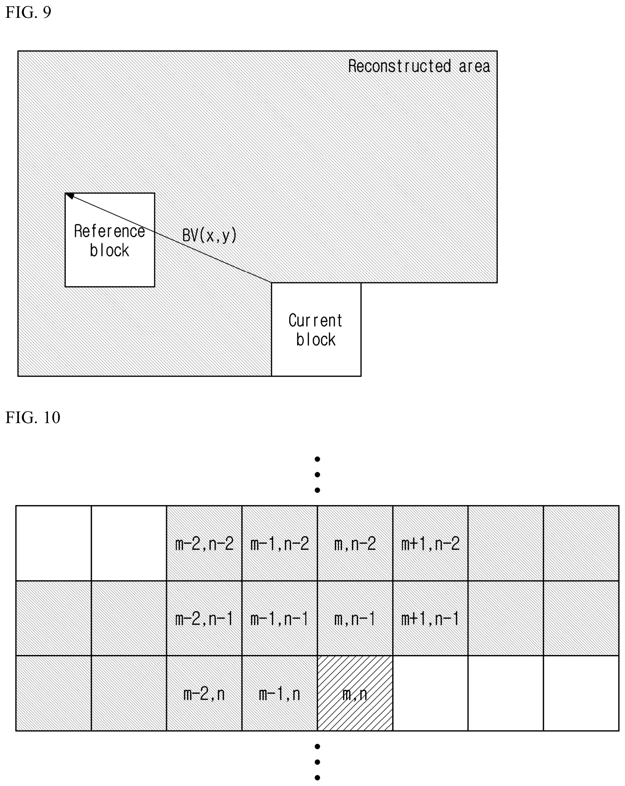

An IBC mode may be a mode for searching for an optimal block vector (BV) through block matching between a current block and a reference block. In the IBC mode, multiple BV candidates may be managed as a candidate list. One of the BV candidates included in the candidate list may be signaled, and BV information may also be signaled. FIG. 9 is a diagram showing a BV in the IBC mode according to an embodiment of the present disclosure. Here, the BV may indicate a displacement from a current block to an already reconstructed reference block in a current picture

### Fraction-pel extension

An expression of an IBC BV may be extended to fractional-pel resolutions. Therefore, to derive prediction samples located at non-integer phases in a reconstructed area of a current picture, an interpolation filter may be necessary. Options of BV resolutions may be extended to include 1/4-pel resolution in addition to full-pel resolution and 4-pel resolution. Here, information indicating the 1/4-pel, full-pel, or 4-pel resolution may be signaled. Interpolation filters applied to luma and chroma components of an IBC block may be identical to an 8-tap luma filter and a chroma filter used for motion compensation, respectively.

### IBC reference area

A reference area in the IBC mode may be extended to two coding tree unit (CTU) rows above a current CTU. FIG. 10 is a diagram showing a reference area in the IBC mode according to an embodiment of the present disclosure. In other words, FIG. 10 is a diagram showing reference areas of a CTU (m, n). Specifically, to code the CTU (m, n), reference areas may include CTUs with indexes (m-2, n-2) to (W, n-2), (0, n-1) to (W, n-1), and (0, n) to (m, n). Here, W may be a maximum horizontal index in a current tile, slice, or picture. In other words, W may be a maximum width in a current tile, slice, or picture. When a CTU size (width) is 256, reference areas may be limited to one CTU row above a current CTU. This setting (limitation) may ensure that, when a CTU size is 128 or 256, IBC does not require additional memory in a current encoder test model (ETM) platform. A sample-specific BV search (or local search) range may be limited horizontally to $[-(C << 1), C >> 2]$ and vertically to $[-C, C >> 2]$ to adapt to reference area expansion. Here, C may be a size of a CTU.

### General derivation of prediction samples for chromatic components

When intra prediction is performed on a current block, a luma component block (luma block) and a chroma component block (chroma block) of the current block may be predicted. In this case, an intra prediction mode for the chroma component (chroma block) and an intra prediction mode for the luma component (luma block) may be separately set.

For example, the intra prediction mode for the chroma component may be indicated based on intra chroma prediction mode information, which may be signaled in the form of an intra_chroma_pred_mode syntax element. For example, the intra chroma prediction mode information may indicate one of candidate modes including at least one of the planar mode, the DC mode, the vertical mode, the horizontal mode, a derived mode (DM), the L_CCLM mode, the T_CCLM mode, and the LT_CCLM mode. The DM may also be referred to as "direct mode." The CCLM may be referred to as "LM."

Meanwhile, the DM and CCLM are dependent intra prediction modes for predicting a chroma block using information on a luma block. The DM may indicate a mode in which an intra prediction mode identical to an intra prediction mode for the luma component is applied as an intra prediction mode for the chroma component. Also, the CCLM may an indicate intra prediction mode in which samples derived by subsampling reconstructed samples of the luma block during the process of generating a prediction block of the chroma block, and then applying a CCLM parameter (e.g., $\alpha$ and/or $\beta$) to subsampled samples, are used as prediction samples of the chroma block.

### Overview of direct block vector (DBV) for chroma block

A DBV may be used in a chroma block in a dual-tree slice. When a chroma dual tree is activated, a flag indicating whether a chroma block has been encoded using the IBC mode may be signaled.

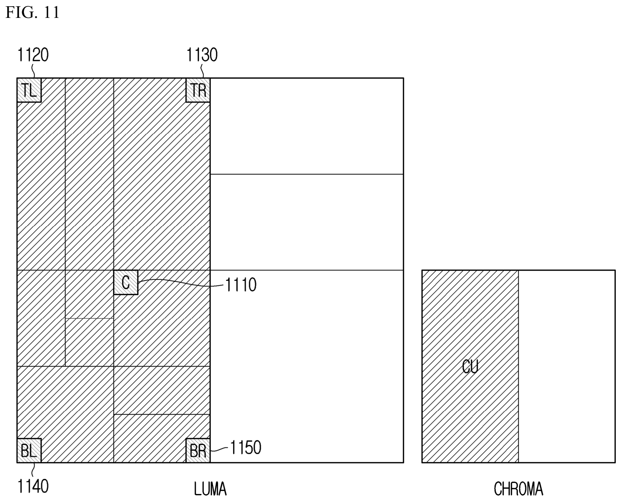

FIG. 11 is a diagram showing luma blocks used for DBV derivation according to an embodiment of the present disclosure. When a luma block at a C position 1110, a TL position 1120, a TR position 1130, a BL position 1140, or a BR position 1150 is encoded using the IBC mode or the intraTMP mode, a BV used for encoding the luma block may be scaled and used as a BV for a chroma block. Here, template matching may be used for scaling the BV.

Hereinafter, an image encoding/decoding method according to an embodiment of the present disclosure will be described in detail.

### Embodiment 1

The present disclosure relates to a method of effectively generating a chroma prediction block using a BV. Also, the present disclosure proposes a method of configuring a chroma BV candidate.

To generate a prediction block of a current DBV chroma block, the present disclosure may utilize BV information stored in one or more luma blocks corresponding to the current chroma block and/or BV information stored around the one or more luma blocks. For example, like in the above-described DBV derivation, when a luma block corresponding to a current chroma block is predicted by utilizing the IBC mode or the intraTMP mode, a BV may be stored. The stored BV information may be utilized to predict the current chroma block.

To derive a DBV of the current chroma block, according to the present disclosure, it may be determined whether BVs are stored in a search order determined between an encoder and a decoder for one or more luma blocks corresponding to the current chroma block. Subsequently, according to the present disclosure, a first-found BV may be rescaled in accordance with the current chroma block, and a chroma reference block indicated by the BV may be copied as the current chroma block.

However, it is necessary to know which one of BVs stored in the one or more luma blocks corresponding to the current chroma block is an optimal BV suited for the current chroma block. Therefore, embodiments of the present disclosure propose a method of generating a chroma prediction block using one or more luma BVs.

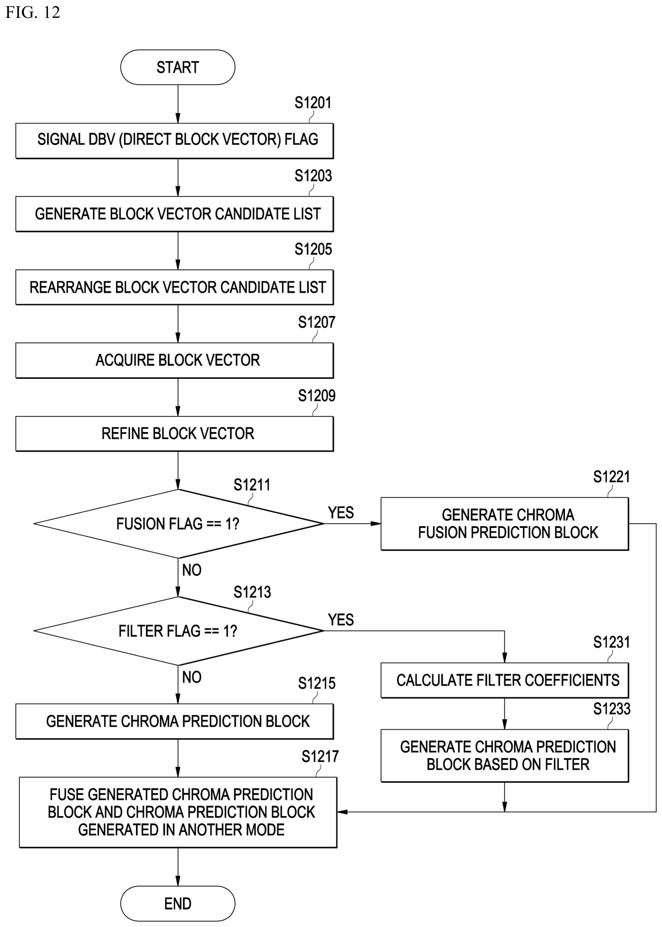

FIG. 12 is a flowchart of a method of predicting a current chroma block according to an embodiment of the present disclosure. The image decoding apparatus 200 may signal (acquire) a DBV flag (S1201). Specifically, the image decoding apparatus 200 may decode DBV flag information received in a bitstream, and when the flag is true, may perform a DBV mode. Signaling the DBV flag may be omitted by an agreement between the image encoding apparatus 100 and the image decoding apparatus 200. For example, when there is no BV candidate because one or more luma blocks corresponding to the current chroma block have not been encoded using the IBC mode or the intraTMP mode, signaling the DBV flag may be omitted. In this case, the DBV mode may not be used.

The image decoding apparatus 200 may generate a BV candidate list (S1203). In other words, the image decoding apparatus 200 may configure BV candidates. Candidate BVs stored in the BV candidate list may be BV information stored in a reference block. Here, the reference block may be a previously reconstructed luma block and/or a previously reconstructed chroma block. When the reference block is encoded using the IBC mode, the intraTMP mode, or the DBV mode, BV information may be stored in the reference block.

According to the embodiment of the present disclosure, in the case of generating a BV candidate list, the image decoding apparatus 200 may compare BV values of a candidate and other candidates included in the BV candidate list and include the candidate in the BV candidate list only when a difference between the BV values exceeds a predefined threshold. Here, the image decoding apparatus 200 may check the redundancy by applying different thresholds depending on whether a reference block used for generating the BV candidate list is a luma block or a chroma block. Alternatively, the same threshold may be applied irrespective of the type of reference block. In addition, the same threshold may be defined in advance between the image encoding apparatus 100 and the image decoding apparatus 200 and applied thereto. Alternatively, a threshold adaptively determined in the image encoding apparatus 100 may be transmitted to the image decoding apparatus 200.

When a BV candidate list is generated based on a threshold according to the present disclosure, the image decoding apparatus 200 may retain only candidates that are added to the list first. Alternatively, the image decoding apparatus 200 may retain the most recently added candidate and exclude similar candidates previously added to the list. By comparing BV values, the image decoding apparatus 200 may determine that there is high similarity between candidates whose BV values have a difference not exceeding the threshold, and may not include the corresponding candidate in the BV candidate list. Since multiple BVs with high similarity are not included as candidates, encoding efficiency and prediction efficiency can be improved.

As another example, when the reference block is in the IBC mode, the intraTMP mode, or the DBV mode in which a fusion mode is applied, only BV information of a corresponding block may be included in the BV candidate list. In other words, when a prediction mode of the reference block is a mode in which multiple reference blocks are fused, only BV information of a corresponding block may be included in the BV candidate list.

According to the present disclosure, candidate BVs included in the BV candidate list may be luma BVs. In this case, the image decoding apparatus 200 may perform scaling on a luma BV to predict a current chroma block using the candidate BVs included in the BV candidate list. This is merely one example, and the candidate BVs included in the BV candidate list may be chroma BVs on which scaling has been performed. Whether to include luma BVs or post-scaling chroma BVs in the BV candidate list may be determined by an agreement between the image encoding apparatus 100 and the image decoding apparatus 200.

The image decoding apparatus 200 may rearrange the BV candidate list (S1205). Specifically, the image decoding apparatus 200 may rearrange the BV candidate list based on a template cost (error) between a template area (i.e., a first template area) neighboring the current chroma block and a template area (i.e., a second template area) neighboring a reference block indicated by a chroma block vector. Here, the image decoding apparatus 200 may rearrange the BV candidate list in increasing order of template cost (error).

When a difference between the template costs is smaller than a predefined threshold, the image decoding apparatus 200 may remove a latter candidate from the list. In other words, when a difference between a template cost calculated based on a first added candidate BV and a template cost calculated based on a second added candidate BV is smaller than the threshold, the latter, that is, the second added candidate, may be removed from the BV candidate list.

Different thresholds may be applied depending on whether a reference block is a luma block or a chroma block. Alternatively, the same threshold may be applied irrespective of the type of reference block. According to the present disclosure, the threshold may be the number of pixels in a template area. The present disclosure is not limited thereto, and the threshold may be determined in various ways.

To calculate a template cost, an error calculation method such as SAD, sum of absolute transformed difference (SATD), sum of squared error (SSE), mean-removed sum of difference (MR-SAD), mean-removed sum of squared error (MR-SSE), mean-removed sum of transformed difference (MR-SATD), etc., may be used.

The image decoding apparatus 200 may acquire a BV (S1207). In other words, the image decoding apparatus 200 may acquire one of the candidate BVs in the BV candidate list rearranged in operation S1205. Which one of the candidate BVs in the BV candidate list will be acquired may be determined by an agreement between the image encoding apparatus 100 and the image decoding apparatus 200. For example, the image encoding apparatus 100 and the image decoding apparatus 200 may determine to use a BV corresponding to a $0^{th}$ index in the BV candidate list for predicting the current chroma block.

Alternatively, the image decoding apparatus 200 may be aware of a BV used for predicting the current chroma block from relevant information signaled from the image encoding apparatus 100. For example, the image decoding apparatus 200 may acquire a BV of the current chroma block based on a $k^{th}$ index (k is a real number) in the BV candidate list signaled from the image encoding apparatus 100.

Alternatively, when a prediction mode of the current chroma block is a mode in which several BVs are used for fusion, top n BVs in the BV candidate list may be used for predicting the current chroma block without signaling relevant information. Here, n may be a value agreed between the image encoding apparatus 100 and the image decoding apparatus 200. In addition, n is a natural number.

The image decoding apparatus 200 may refine (or correct) the acquired BV (S1209). Since a BV error may occur during the process of scaling the luma BV, it is necessary to refine the BV. For example, when a YUV format is YUV420, a luma BV $(v_x, v_y)$ may be scaled in accordance with a chroma channel to generate a chroma BV $(v_x>>1, v_y>>1)$ according to the present disclosure, and an error may occur during this process. Therefore, the image decoding apparatus 200 may calculate template costs for each of chroma BV candidates $(v_x>>1, v_y>>1)$, $((v_x-1)>>1, v_y>>1)$, $(v_x>>1, (v_y-1)>>1)$, and $((v_x-1)>>1, (v_y-1)>>1)$ and then refine the required BV into a BV with the lowest template cost. The refinement process may be performed adaptively in accordance with the YUV format.

The above-described refinement process is merely one example, and when a luma BV is not at integer-pel precision, a method of scaling the luma BV in accordance with a chroma channel may vary. For example, k least significant bits of the luma BV $(v_x, v_y)$ may represent a fractional position. In this case, scaling may be performed on luma BV information excluding information of the k least significant bits. Here, k may be a real number.

In accordance with the chroma BV acquired through scaling of the luma BV, the image decoding apparatus 200 may perform BV refinement based on template costs of specific positions. Here, the specific positions may be chroma BV candidate positions. Alternatively, a space between the specific positions or the number of specific positions may be determined by considering a size of a block or a magnitude of a BV.

The above-described refinement process may include a fractional position in consideration of a case where interpolation is performed. For example, when a luma BV is not at integer-pel precision and a chroma BV may be represented at fractional precision, the image decoding apparatus 200 may also calculate a template cost for the chroma BV at a position with fractional-pel precision. Alternatively, when a chroma BV may be represented at fractional precision even with a luma BV at integer-pel precision, the image decoding apparatus 200 may also calculate a template cost for the chroma BV at a position with fractional-pel precision. Here, a method of calculating the template cost may be the same as that performed during the candidate list rearrangement operation.

The image decoding apparatus 200 may determine whether a fusion flag has a value of 1 (S1211). Specifically, when the fusion flag acquired from the bitstream is true (Yes in S1211), that is, when the fusion flag has a value of 1, the image decoding apparatus 200 may generate a chroma prediction block (e.g., a final prediction block) by fusing multiple chroma reference blocks indicated by multiple chroma BVs (S1221). According to another embodiment of the present disclosure, the value of the fusion flag may be determined by an agreement between the image encoding apparatus 100 and the image decoding apparatus 200 without signaling. For example, when at least one of the one or more luma blocks corresponding to the current chroma block is in the IBC mode or the intraTMP mode and a fusion flag of the corresponding luma blocks (or one of the plurality of corresponding luma blocks) has a value of 1, the image decoding apparatus 200 may generate a final prediction block by applying the same value as the fusion flag of the corresponding luma blocks (or one of the plurality of corresponding luma blocks) to the current chroma block. As another example, when the current chroma block has one chroma BV, the fusion flag may be derived as false without signaling.

When the fusion flag has a value of 1 (Yes in S1211), the image decoding apparatus 200 may generate the final prediction block by fusing the multiple chroma reference blocks indicated by the multiple chroma BVs. In this case, the image decoding apparatus 200 may generate the final prediction block by calculating a weighted sum of the multiple chroma reference blocks. To calculating the weighted sum of the multiple chroma reference blocks, a weight applied to each chroma reference block may be determined using the same method applied to a corresponding luma block.

For example, when a prediction mode of a corresponding luma block is the intraTMP mode or the IBC mode, a fusion flag of the luma block has a value of 1, and a weight is determined through SAD-based weight derivation, the image decoding apparatus 200 may also determine a weight of a chroma block through SAD-based weight derivation. As another example, when a prediction mode of a corresponding luma block is the intraTMP mode or the IBC mode, a fusion flag of the luma block has a value of 1, and a weight is determined through filter-based weight derivation, the image decoding apparatus 200 may also determine a weight of a chroma block through filter-based weight derivation.

Alternatively, a method of determining a weight of a chroma block may be determined independently of a method of determining a weight of a luma block. For example, the method of determining a weight of a chroma block may be determined by an agreement between the image encoding apparatus 100 and the image decoding apparatus 200. As an example, irrespective of the method of determining a weight of a corresponding luma block, only SAD-based weight derivation may be used for a chroma block. Alternatively, irrespective of the method of determining a weight of a corresponding luma block, only filter-based weight derivation may be used for a chroma block.

Here, SAD-based weight derivation may be a method of calculating an error value between a current block and each of reference blocks indicated by multiple BVs and applying a weight in accordance with a ratio of the error value. For example, the error value may be determined based on an SAD between previously reconstructed adjacent samples of the current block and previously reconstructed adjacent samples of a reference block.

Filter-based weight derivation may be a method of deriving a filter coefficient using correlation between a current block and multiple reference blocks indicated by multiple BVs. This enables the image decoding apparatus 200 to predict the current block using multiple reference blocks.

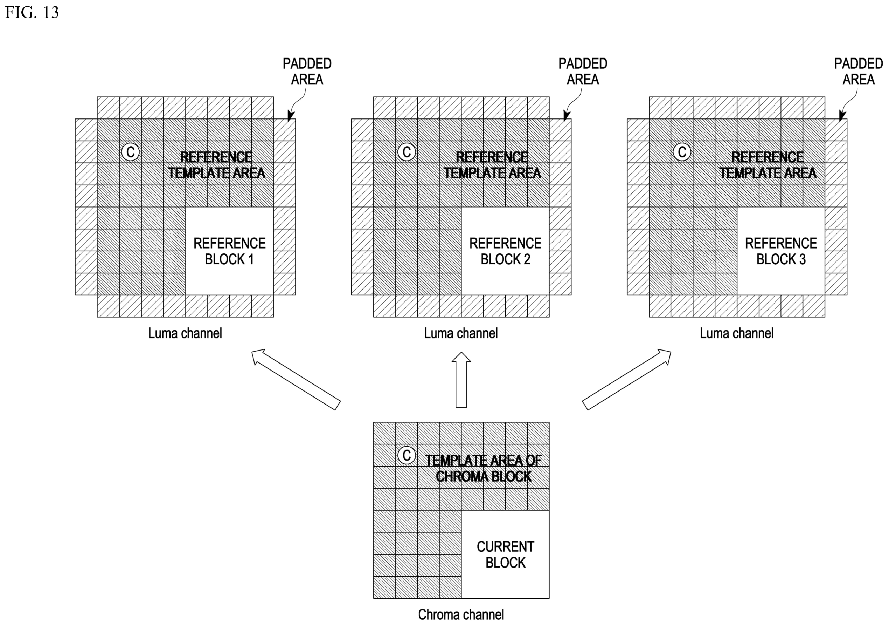

FIG. 13 is a diagram showing template areas of a current block and multiple reference blocks according to an embodiment of the present disclosure. Specifically, the image decoding apparatus 200 may train filter coefficients such that the mean squared error (MSE) between a template area of a chroma block and multiple reference template areas is minimized. Subsequently, the image decoding apparatus 200 may generate a final prediction block using equation 2.

[Equation 2]
$$\text{Output}_i = c_0 S_1 + c_1 S_2 + \cdots + c_{n-1} S_{n-1} + c_n B$$

$\text{Output}_i$: an $i^{th}$ sample (final prediction block) of a current block.
$C_0, C_1, ..., C_{n-1}$, and $C_n$: filter coefficients
$S_1$: a luma sample of reference block 1 at a position corresponding to $\text{output}_i$.
$S_2$: a luma sample of reference block 2 at a position corresponding to $\text{output}_i$.
$S_3$: a luma sample of reference block 3 at a position corresponding to $\text{output}_i$.
$S_{n-1}$: a luma sample of reference block n-1 at a position corresponding to $\text{output}_i$.
B: a bias term (e.g., a value of (1 << (bit depth - 1)).

As an example of a method of calculating filter coefficients, the filter coefficients may be trained to minimize the MSE between a current template area and reference template areas. Subsequently, the image decoding apparatus 200 may generate a final prediction block using equation 2. This is merely one example, and various models may be applied to derive the relational expression between a template area of a chroma block and a reference template area similarly to a convolutional cross-component intra prediction model (CCCM), a gradient and location-based convolutional cross-component model (GL-CCCM), a cross-component intra prediction model (CCLM), a gradient linear model (GLM), or a non-downsampled CCCM.

According to an embodiment of the present disclosure, the number of chroma blocks for generating a final prediction block may be determined by an agreement between the image encoding apparatus 100 and the image decoding apparatus 200. For example, the image encoding apparatus 100 and the image decoding apparatus 200 may generate a final prediction block by fusing P chroma prediction blocks. Here, P may be an integer.

In this case, the maximum number of chroma prediction blocks for chroma prediction block fusion may be determined by an agreement between the image encoding apparatus 100 and the image decoding apparatus 200. For example, the image encoding apparatus 100 and the image decoding apparatus 200 may generate a final prediction block by fusing up to K chroma prediction blocks. Here, K may be an integer. When the number of chroma prediction blocks for generating a chroma prediction block is larger than K, the image decoding apparatus 200 may fuse chroma prediction blocks using K BVs. The foregoing P BVs may refer to P BVs positioned ahead of a candidate BV in the BV candidate list based on an index indicating the candidate BV.

When the fusion flag has a value other than 1 (No in S1211), the image decoding apparatus 200 may determine whether a filter flag has a value of 1 (S1213). In other words, the image decoding apparatus 200 may acquire filter flag information from the bitstream, and when the corresponding flag value is true (Yes in S1213), may calculate the filter coefficients between the current chroma block and a chroma reference block indicated by a chroma BV (S1231). The image decoding apparatus 200 may generate a chroma prediction block based on the calculated filter (S1233). In other words, the image decoding apparatus 200 may generate a chroma prediction block based on the filter coefficients calculated in operation S1231.

Alternatively, the filter flag may be determined by an agreement between the image encoding apparatus 100 and the image decoding apparatus 200 without signaling. For example, when at least one of one or more luma blocks corresponding to the current chroma block is in the IBC mode or the intraTMP mode and a filter flag of the corresponding block has a value of 1, the image decoding apparatus 200 may use the filter flag which has been used for the luma block, for the current chroma block.

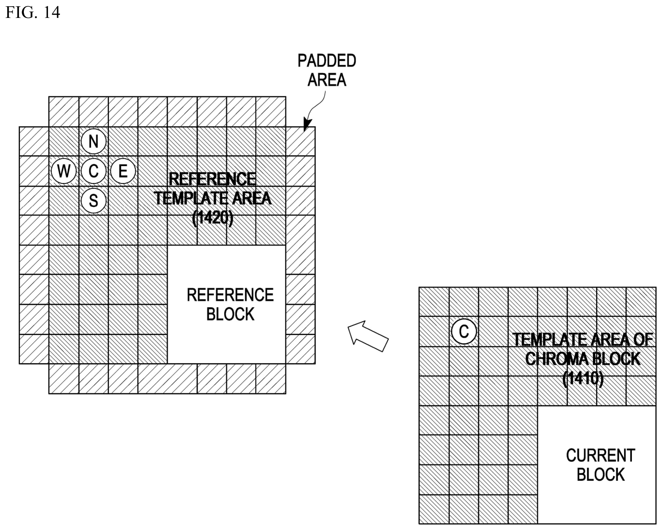

According to the present disclosure, the filter coefficients may be calculated using correlation between the current chroma block and the chroma reference block indicated by the chroma BV. For example, as shown in FIG. 14, the image decoding apparatus 200 may train the filter coefficients such that the MSE between a template area 1410 of the chroma block and a reference template area 1420 is minimized, and may apply a filter as shown in equation 3 below.

[Equation 3]

$$Output_i = c0*C+c1*N+c2*S+c3*E+c4*W+c5*B$$

Output$_i$: an i$^{th}$ sample (final prediction block) of a current block.
c0, c1, c2, c3, c4, and c5: filter coefficients
C: a sample at the same position as Output$_i$ in a reference block
N: a top sample adjacent to C.
S: a bottom sample adjacent to C.
W: a left sample adjacent to C.
E: a right sample adjacent to C.
B: a bias term (e.g., a value of (1 << (bit depth - 1)).

The above-described embodiment is merely one example, and various models may be applied to derive the relational expression between a template area of a chroma block and a reference template area similarly to the CCCM, the GL-CCCM, the CCLM, the GLM, or the non-downsampled CCCM.

When the filter flag has a value other than 1 (No in S1213), the image decoding apparatus 200 may generate a chroma prediction block (S1215). Specifically, the image decoding apparatus 200 may generate a chroma prediction block by copying the reference block indicated by the chroma BV to the current block.

The image decoding apparatus 200 may fuse the generated chroma prediction block and a chroma prediction block generated using another mode (S1217). In other words, the image decoding apparatus 200 may fuse the chroma prediction block generated using the other mode and the chroma prediction block generated in operation S1215. For example, the image decoding apparatus 200 may fuse a chroma prediction block generated in the DBV mode and a chroma prediction block generated using a linear model such as a CCLM, a multi-model linear model (MMLM), or the like. Whether to fuse the chroma prediction block generated in operation S1215 and a chroma prediction block generated in another mode may be signaled in the bitstream. Alternatively, whether to fuse the chroma prediction block generated in operation S1215 and a chroma prediction block generated in another mode may be determined by an agreement between the image encoding apparatus 100 and the image decoding apparatus 200.

The operations performed in accordance with FIG. 12 have been described based on the image decoding apparatus 200, but the corresponding operations may also be performed by image decoding apparatus 100. The operations described in FIG. 12 may be omitted, or the order thereof may change.

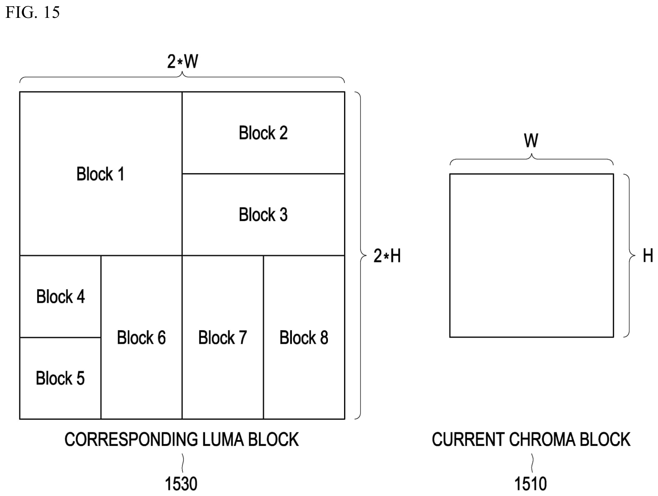

A BV candidate list may be necessary to predict a chroma block more accurately. There are various ways to generate a BV candidate list. For example, candidate BVs may be BVs stored in one or more luma blocks corresponding to the current chroma block. Referring to FIG. 15, multiple corresponding luma blocks may exist in a (2W×2H) area corresponding to a current chroma block 1510 (W×H). Accordingly, candidate BVs constituting a BV candidate list may be BVs stored in one or more luma blocks 1530 corresponding to the current chroma block 1510. In other words, BVs constituting the BV candidate list may be all or some BVs existing in the (2W×2H) area.

Multiple BVs may be stored in a specific luma block. For example, multiple BVs may be stored in Block1 of FIG. 15. Examples of multiple BVs stored in one block may be i) a case where a prediction mode of Block1 is the intraTMP mode and a prediction is made by fusing multiple BVs, ii) a case where the prediction mode of Block1 is the IBC mode and a prediction is made through bi-prediction, and iii) a case where the prediction mode of Block1 is the IBC mode and a prediction is made by fusing multiple BVs. In this case, all the multiple BVs included in the specific luma block may be candidate BVs. Alternatively, only some of the multiple BVs included in the specific luma block may be candidate BVs.

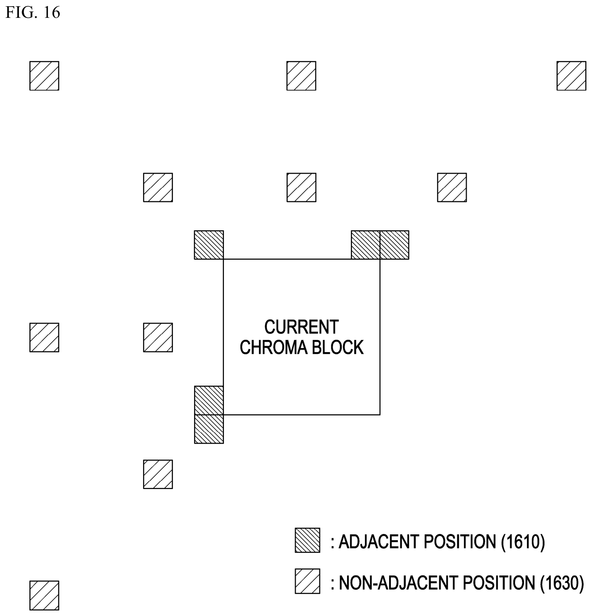

FIG. 16 is a diagram showing neighboring areas of a current chroma block according to an embodiment of the present disclosure. A candidate BV may be a BV stored in a block at a position adjacent or not adjacent to a current chroma block or a corresponding luma block. Referring to FIG. 16, BVs stored in reference blocks at positions 1610 adjacent to the current chroma block or positions 1630 not adjacent to the current chroma block may be candidate BVs.

When top-left coordinates of the current chroma block are (x, y), the positions 1610 adjacent to the current chroma block may be (x-1, y-1), (x+W-1, y-1), (x+W, y-1), (x-1, y+H), and (x-1, y+H-1), and BVs of reference blocks included in these positions may be candidate BVs constituting a BV candidate list. Here, H is a height of the current chroma block, and W is a width of the current chroma block.

As another example, when the top-left coordinates of the current chroma block are (x, y), the positions 1630 not adjacent to the current chroma block may be referred to as NonAdj_pos as shown in table 2 below. BVs of reference blocks included in these positions may be candidate BVs constituting a BV candidate list.

[Table 2]

```
int offsetX = 0; int offsetY = 0;
    int offsetX0 = 0; int offsetX1 = 0; int offsetX2 = pu.chType ==
CHANNEL_TYPE_LUMA ? pu.Y().width >> 1 : pu.Cb().width >> 1;
    int offsetY0 = 0; int offsetY1 = 0; int offsetY2 = pu.chType ==
CHANNEL_TYPE_LUMA ? pu.Y().height >> 1 : pu.Cb().height >> 1;

   const int iNAIntervalHor = std::max((int)(pu.chType == CHANNEL_TYPE_LUMA ?
pu.Y().width * 2 : pu.Cb().width * 2) >> 1, 4);
   const int iNAIntervalVer = std::max((int)(pu.chType == CHANNEL_TYPE_LUMA ?
pu.Y().height * 2 : pu.Cb().height * 2) >> 1, 4);
  const int iNACANDIDATE_NUM[7] = { 5, 9, 9, 9, 9, 9, 9 };
  const int idxMap[7][9] = {
   { 0, 1, 2, 3, 4 },
   { 0, 1, 2, 3, 4, 5, 6, 7, 8 },
   { 0, 1, 2, 3, 4, 5, 6, 7, 8 },
   { 0, 1, 2, 3, 4, 5, 6, 7, 8 },
   { 0, 1, 2, 3, 4, 5, 6, 7, 8 },
   { 0, 1, 2, 3, 4, 5, 6, 7, 8 },
   { 0, 1, 2, 3, 4, 5, 6, 7, 8 }
  };

for (int iDistanceIndex = 0; iDistanceIndex < 7; iDistanceIndex++)
{
  const int iNADistanceHor = iNAIntervalHor * (iDistanceIndex + 1);
  const int iNADistanceVer = iNAIntervalVer * (iDistanceIndex + 1);

    for (int NASPIdx = 0; NASPIdx < iNACANDIDATE_NUM[iDistanceIndex];
NASPIdx++)
   {
    switch (idxMap[iDistanceIndex][NASPIdx])
    {
    case 0: offsetX = offsetX0 = -iNADistanceHor - 1;         offsetY = offsetY0 =
iNAIntervalVer + iNADistanceVer - 1; break;
     case 1: offsetX = offsetX1 = iNAIntervalHor + iNADistanceHor - 1; offsetY =
offsetY1 = -iNADistanceVer - 1;          break;
    case 2: offsetX = offsetX2;      offsetY = offsetY1;      break;
    case 3: offsetX = offsetX0;      offsetY = offsetY2;      break;
    case 4: offsetX = offsetX0;      offsetY = offsetY1;      break;
    case 5: offsetX = -1;          offsetY = offsetY0;      break;
    case 6: offsetX = offsetX1;      offsetY = -1;          break;
    case 7: offsetX = offsetX0 >> 1; offsetY = offsetY0;      break;
    case 8: offsetX = offsetX1;      offsetY = offsetY1 >> 1; break;
    default: printf("error!"); exit(0); break;
    }

    Position NonAdj_pos(x + offsetX, y + offsetY);
     ...
  }
}
```

As still another example, when the top-left coordinates of the current chroma block are (0, 0), the positions 1630 not adjacent to the current chroma block may be referred to as NonAdj_pos as shown in table 3 below. BVs of reference blocks included in these positions may be candidate BVs constituting a BV candidate list.

[Table 3]

```
  const int iNAIntervalHor = std::max((int)(pu.chType == CHANNEL_TYPE_LUMA ?
pu.Y().width * 2 : pu.Cb().width * 2) >> 1, 4);
  const int iNAIntervalVer = std::max((int)(pu.chType == CHANNEL_TYPE_LUMA ?
pu.Y().height * 2 : pu.Cb().height * 2) >> 1, 4);
 const int iNACANDIDATE_NUM2[7] = { 4, 4, 4, 4, 4, 4, 4 };
  const int idxMap2[7][5]     = { { 0, 1, 2, 3 }, { 0, 1, 2, 3 }, { 0, 1, 2, 3 }, { 0, 1, 2,
3 },
                  { 0, 1, 2, 3 }, { 0, 1, 2, 3 }, { 0, 1, 2, 3 } };

  for (int iDistanceIndex = 0; iDistanceIndex < 7; iDistanceIndex++)
  {
    const int iNADistanceHor = iNAIntervalHor * (iDistanceIndex + 1);
    const int iNADistanceVer = iNAIntervalVer * (iDistanceIndex + 1);

      for (int NASPIdx = 0; NASPIdx < iNACANDIDATE_NUM2[iDistanceIndex;
NASPIdx++)
    {
      switch (idxMap2[iDistanceIndex][NASPIdx])
      {
      case 0: offsetX = offsetX0 = -iNADistanceHor - 1;      offsetY = offsetY2 +
((iNAIntervalVer + iNADistanceVer - 1 - offsetY2) >> 1); break;
      case 1: offsetX = offsetX2 + ((iNAIntervalHor + iNADistanceHor - 1 - offsetX2)
>> 1); offsetY = offsetY0 = -iNADistanceVer - 1; break;
      case 2: offsetX = offsetX0;                offsetY = offsetY0 + ((offsetY2 -
offsetY0) >> 1); break;
     case 3: offsetX = offsetX0 + ((offsetX2 - offsetX0) >> 1); offsetY = offsetY0; break;
      default: printf("error!"); exit(0); break;
      }

      Position NonAdj_pos(x + offsetX, y + offsetY);
      ...
    }
  }
```

According to another embodiment of the present disclosure, candidate BVs may be BVs stored in a history-based list. For example, when a chroma block is encoded and/or decoded in the IBC mode, the intraTMP mode, or the DBV mode, BVs may be added to the history-based list. Accordingly, when the current chroma block is encoded and/or decoded in the DBV mode, BVs stored in the history-based list may be candidate BVs for the current chroma block. Here, a size of the history-based list may be determined by an agreement between the image encoding apparatus 100 and the image decoding apparatus 200. In other words, the number of candidates that may be included in the history-based list may be determined by an agreement between the image encoding apparatus 100 and the image decoding apparatus 200. For example, a size of a BV candidate list may be an integer that is greater than or equal to 0, and the size may be signaled in a bitstream or determined by an agreement between the image encoding apparatus 100 and the image decoding apparatus 200 without signaling. Also, the history-based list may be initialized for each CTU. In addition, the history-based list may be initialized every time a CTU row is changed.

## Embodiment 2

The present disclosure relates to a method of effectively generating a chroma prediction block and proposes a method of rearranging a BV candidate list. By rearranging a BV candidate list, the image encoding apparatus 100 and/or the image decoding apparatus 200 may place a candidate BV indicating a similar position to a current chroma block in a front part of the candidate list and effectively generate a chroma prediction block accordingly.

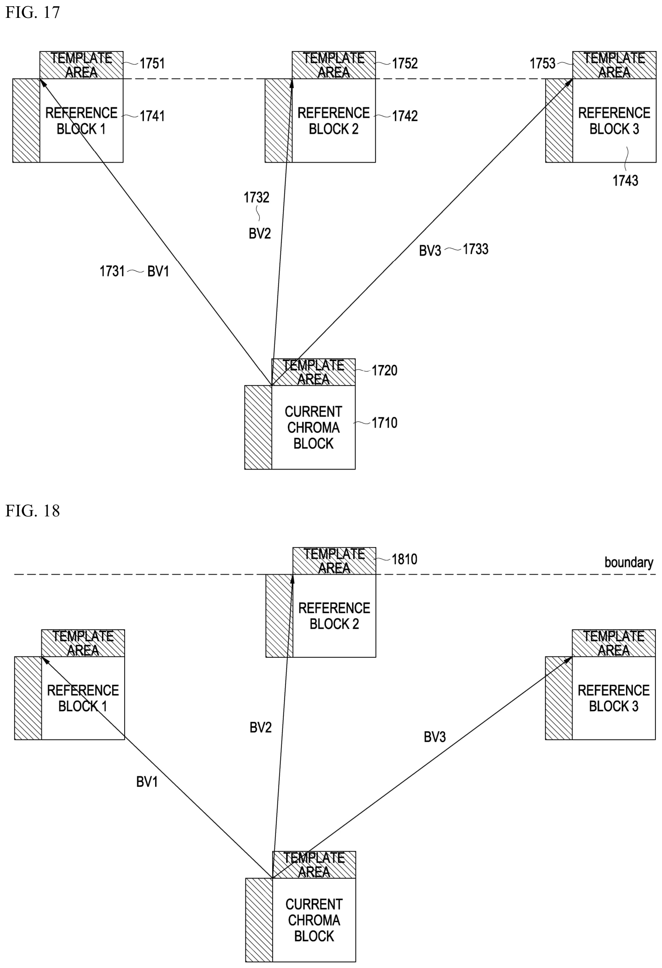

FIG. 17 is a diagram showing candidate BVs according to an embodiment of the present disclosure. The image encoding apparatus 100 and/or the image decoding apparatus 200 may calculate template costs between a neighboring template area 1720 of a current chroma block 1710 and neighboring template areas 1751, 1752, and 1753 of reference blocks 1741, 1742, and 1743 indicated by candidate BVs 1731, 1732, and 1733 and then rearrange a BV candidate list. In other words, the image encoding apparatus 100 and/or the image decoding apparatus 200 may calculate template costs of candidate BVs in the BV candidate list and rearrange the BV candidate list in increasing order of template cost.

For example, when the BV candidate list is {BV1, BV2, BV3} and the template costs satisfy Cost_BV3<Cost_BV1<Cost_BV2, the BV candidate list may be rearranged as {BV3, BV1, BV2}.

To calculate the template costs, an error calculation method such as SAD, SATD, SSE, MR-SAD, MR-SSE, MR-SATD, etc., may be used.

A height or width of template areas may be determined by an agreement between the image encoding apparatus 100 and the image decoding apparatus 200. For example, each of the height and width may be 1. Accordingly, a top template area of the current block may have a size of $W \times 1$, and a left template area of the current block may have a size of $1 \times H$. Here, W and H are a width and height of the current chroma block or reference block, respectively. A shape and size of template areas are not limited to the foregoing example, and template areas may have any shape and size. A shape and size of template areas may be determined by an agreement between the image encoding apparatus 100 and the image decoding apparatus 200.

According to the embodiment of the present disclosure, the image encoding apparatus 100 and/or the image decoding apparatus 200 may rearrange a BV candidate list with respect to each of color difference components Cb and Cr. Here, the image encoding apparatus 100 and/or the image decoding apparatus 200 may signal an index indicating a candidate BV in the BV candidate list for each color different component. Also, a modification in which the image encoding apparatus 100 and/or the image decoding apparatus 200 use a first candidate in the rearranged list without signaling an index, and other modifications are possible.

As an embodiment, the image encoding apparatus 100 and/or the image decoding apparatus 200 may perform rearrangement with respect to the color difference component Cb only. In this case, the image encoding apparatus 100 and/or the image decoding apparatus 200 may reuse the BV candidate list rearranged with respect to the Cr component based on the Cb component.

As another embodiment, both the color difference components Cb and Cr may be taken into consideration to perform rearrangement, and the image encoding apparatus 100 and/or the image decoding apparatus 200 perform the rearrangement based on the sum or mean of the template costs of the two color difference components. As still another embodiment, the image encoding apparatus 100 and/or the image decoding apparatus 200 may rearrange each candidate in the BV candidate list based on a candidate with the smallest sum of Cb and Cr template costs.

As another embodiment, the image encoding apparatus 100 and/or the image decoding apparatus 200 may perform rearrangement in consideration of both a luma component and the color difference components Cb and Cr based on the sum or mean of the template costs of the luma component and the two color difference components. Here, the template costs may be calculated in consideration of a YUV format. For example, when an image format is YUV420, the sum of template costs may be defined such that a ratio of a luma template cost and template costs of the color difference components is 1:2:2 as shown in equation 4 below.

[Equation 4]

$$Cost = costY + 2*costCb + 2*costCr$$

FIG. 18 is a diagram showing a template area outside a boundary according to an embodiment of the present disclosure. This is a diagram showing candidate BVs. As shown in FIG. 18, when outside a boundary of a picture, a tile, a slice, etc., a template area 1810 of a reference block indicated by a BV may be unavailable. In consideration of the unavailable template area 1810 of the reference block, the image encoding apparatus 100 and/or the image decoding apparatus 200 may calculate template costs using equation 5 below and compare template costs of difference reference blocks.

[Equation 5]

$$FinalCost_k = (Cost_k + (Samples_k \gg 1))/Samples_k$$

$FinalCost_k$: a final template cost between a current chroma block and a reference block indicated by a $k^{th}$ BV

$Cost_k$: a template cost of an available template area between the current chroma block and the reference block indicated by the $k^{th}$ BV

$Samples_k$: the number of samples of the available template area of the reference block indicated by the $k^{th}$ BV

When all or some template areas of a reference block are unavailable, the image encoding apparatus 100 and/or the image decoding apparatus 200 may set the highest cost for a corresponding one of candidate BVs in a BV candidate list or exclude the corresponding candidate BV from the candidates.

**Embodiment 3**

The present disclosure relates to a method of effectively generating a chroma prediction block and proposes a method of fusing chroma blocks. The fusion between chroma blocks generated using the CCLM and chroma prediction blocks generated using a non-linear model (LM) mode (a DM, a DIMD mode, etc.) shows high performance, but the image encoding apparatus 100 and/or the image decoding apparatus 200 does not fuse a chroma block generated using the DBV mode and a chroma block generated using the CCLM. Therefore, the present disclosure can further enhance the performance of the DBV mode by fusing a chroma block generated using the DBV mode and a chroma block generated using the CCLM.

According to an embodiment of the present disclosure, chroma prediction blocks may be fused using equation 6 below to generate a final prediction block.

[Equation 6]

$$pred_c = \alpha_0 * rec'_L + \alpha_1 * pred_{Dbv}$$

$pred_c$: a final chroma prediction block (i.e., a final prediction block)

$rec'_L$: a chroma prediction block generated using the CCLM

$pred_{Dbv}$: a chroma prediction block generated using the DBV mode

$\alpha_0, \alpha_1$: weights (real numbers, $\alpha_0 + \alpha_1 = 1$)

The weights applied to equation 6 may be determined in various ways. For example, the weights may be determined using a method of table 4 below.

[Table 4]

```
α0 = 1/2;
α1 = 1/2;
if (isNeigh0LM && isNeigh1LM)
{
    α0 = 3/4; α1 = 1/4;
}
else if (!isNeigh0LM && !isNeigh1LM)
{
    α0 = 1/4; α1 = 3/4;
}
```

isNeigh0LM: true when a block adjacent to the left of the current chroma block is predicted using a linear model such as the CCLM, the MMLM, etc.

isNeigh1LM: true when a block adjacent to the top of the current chroma block is predicted using a linear model such as the CCLM, the MMLM, etc.

Alternatively, the image encoding apparatus 100 and/or the image decoding apparatus 200 may derive filter coefficients and then generate a final chroma prediction block using equation 7 below.

[Equation 7]

$$pred_c = \alpha_0 * rec'_L + \alpha_2 * pred_{Dbv} + \alpha_2 * midValue$$

$pred_c$: a final chroma prediction block (i.e., a final prediction block)
$rec'_L$: a luma block at a position corresponding to the current chroma block
$pred_{Dbv}$: a chroma prediction block generated using the DBV mode
$\alpha_0, \alpha_1, \alpha_2$: filter coefficients
midValue: (1 << (bit depth - 1)).

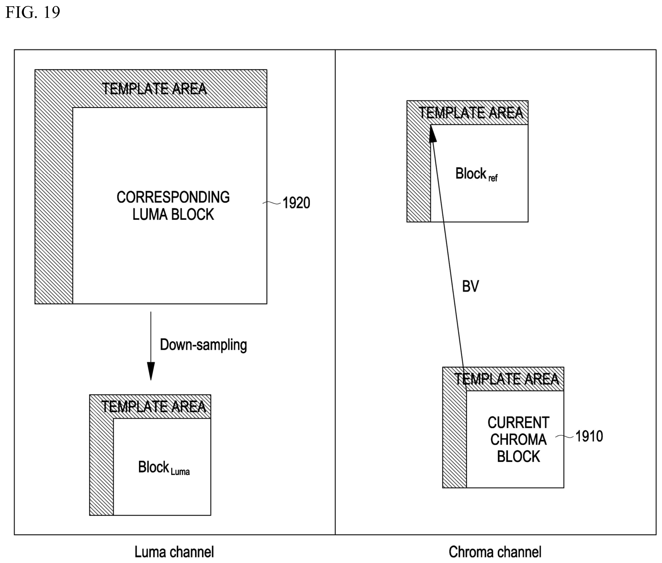

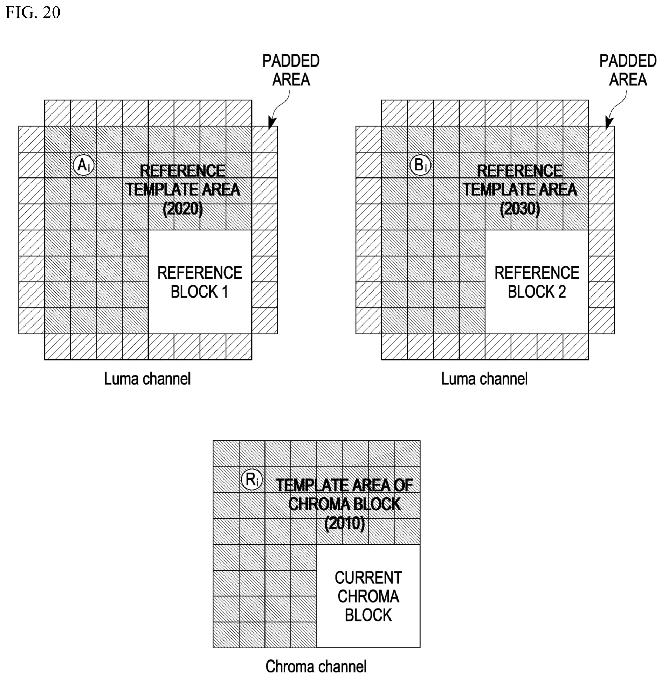

According to the above-described method, the image decoding apparatus 200 may derive filter coefficients using the following method. Referring to FIG. 19, the image decoding apparatus 200 may downsample a corresponding luma block 1920 at a position corresponding to a current chroma block 1910 to make a size of the corresponding luma block equal to a size of the current chroma block. Subsequently, the image decoding apparatus 200 may derive filter coefficients by training the filter coefficients to minimize the MSE between a template area 2010 of the current chroma block and a reference template area indicated by multiple BVs as shown in FIG. 20. In other words, the image decoding apparatus 200 may derive filter coefficients by training the filter coefficients to minimize the MSE between $O_i$ in equation 8 below and a previously reconstructed sample $R_i$ at the same position.

[Equation 8]

$$O_i = \alpha_0 A_i + \alpha_1 B_i + \alpha_2 * midValue$$

i: an $i^{th}$ sample of each template area
$A_i$: an $i^{th}$ sample in a template area of a luma block
$B_i$: an $i^{th}$ sample in a template area of a reference block $Block_{ref}$
$O_i$: a result value obtained by applying coefficients to $A_i$ and $B_i$
$\alpha_0, \alpha_1, \alpha_2$: filter coefficients
midValue: (1 << (bit depth - 1)).

In the case of generating a prediction block by referring to multiple chroma BVs, the image decoding apparatus 200 may refer to multiple template areas to derive filter coefficients. For example, in the case of generating a final prediction block by referring to multiple chroma BVs, equation 9 below may be used, and the image decoding apparatus 200 may derive corresponding filter coefficients accordingly.

[Equation 9]

$$pred_c = \alpha * rec'_L + \sum_{i=0}^{N} (\beta_i * pred_i) + \gamma * midValue$$

$pred_c$: a final chroma prediction block (i.e., a final prediction block)
$rec'_L$: a luma block at a position corresponding to the current chroma block
$pred_i$: multiple chroma prediction blocks including a chroma prediction block generated using the DBV mode
$\alpha, \beta, \gamma$: filter coefficients
midValue: (1 << (bit depth - 1)).

A reference template area that is referred to in order to derive the filter coefficients during the above process may be previously reconstructed neighboring samples of a luma reference block indicated by a BV that is referred to by a previously reconstructed neighboring block at a corresponding luma block position and/or a corresponding luma block. Alternatively, the reference template area may be previously reconstructed neighboring samples of a chroma block and/or previously reconstructed neighboring samples of a chroma reference block indicated by a chroma BV obtained by scaling a BV of a luma block. Alternatively, the reference template area may be previously reconstructed neighboring samples of a chroma reference block indicated by a refined chroma BV.

**EP 4 734 516 A1**

**Embodiment 4**

The present disclosure proposes various methods of signaling necessary information in the DBV mode. For example, necessary information in the DBV mode may be signaled as shown in table 5 below.

[Table 5]

| Coding unit syntax | Descriptor |
|---|---|
| ... | |
| if ( hasChromaBvFlag() ) | |
| { | |
|    DbvChromaFlag | ae(v) |
|    if(DbvChromaFlag) { | |
|     fusionFlag | ae(v) |
|     if (hasFilterFlag() ) | |
|      FilterFlag | ae(v) |
|     if (hasChromaFusionFlag() ) | |
|      fusionOtherModeFlag | ae(v) |
|    } | |
| } | |

In table 5, hasChromaBvFlag() may be a condition of checking whether a candidate BV exists. For example, hasChromaBvFlag() may be an operation of determining whether a corresponding luma block has been encoded and/or decoded using the intraTMP mode or the IBC mode and whether a block adjacent or not adjacent to a current chroma block has been encoded and/or decoded using the intraTMP mode, the IBC mode, or the DBV mode.

In table 5, DbvChromaFlag is a flag indicating whether to apply the DBV mode. When DvbChromaFlag is true, the DBV mode may be applied. hasFilterFlag() is an operation of checking a condition to apply a filter. For example, the image decoding apparatus 200 may determine whether the current chroma block is an I-slice and whether the CCCM, the GLCCCM, or the no-subsampling CCCM is available at an SPS level.

FilterFlag may be a flag indicating whether to apply a filter. When a filter is applied, the image decoding apparatus 200 may derive filter coefficients between the current chroma block and a reference block and generate a prediction block using the derived filter. hasChromaFusionFlag() may be an operation of checking a condition to apply fusion. For example, the image decoding apparatus 200 may determine whether the current chroma block is an I-slice and whether a single LM or the MMLM is available at an SPS level.

fusionOtherModeFlag may be a flag indicating whether to fuse a chroma block generated using the DBV mode and a chroma prediction block generated using another mode. For example, when fusionOtherModeFlag is true, the image decoding apparatus 200 may fuse a prediction block generated based on an MMLM or single-LM mode and a prediction block generated using the DBV mode. fusionFlag may be a flag indicating whether to fuse multiple chroma blocks. When fusionFlag is true, the image decoding apparatus 200 may fuse multiple chroma blocks.

Table 6 to table below show various embodiments of signaling necessary information in the DBV mode. Information of tables 6 to 9 may be the same as the information described in table 5.

[Table 6]

| Coding unit syntax | Descriptor |
|---|---|
| ... | |
| if ( hasChromaBvFlag() ) | |
| { | |
|    DbvChromaFlag | ae(v) |
|    if(DbvChromaFlag) { | |
|     fusionFlag | ae(v) |

26

(continued)

| | |
|---|---|
| if (hasFilterFlag() ) | |
| FilterFlag | ae(v) |
| if (hasChromaFusionFlag() ) | |
| fusionOtherModeFlag | ae(v) |
| } | |
| } | |

[Table 7]

| Coding unit syntax | Descriptor |
|---|---|
| ... | |
| if ( hasChromaBvFlag() ) | |
| { | |
| DbvChromaFlag | ae(v) |
| if(DbvChromaFlag) { | |
| Candidate_idx | unary() or ae(v) |
| if (hasFilterFlag() ) | |
| FilterFlag | ae(v) |
| if (hasChromaFusionFlag() ) | |
| fusionOtherModeFlag | ae(v) |
| } | |
| } | |

[Table 8]

| Coding unit syntax | Descriptor |
|---|---|
| ... | |
| if ( hasChromaBvFlag() ) | |
| { | |
| DbvChromaFlag | ae(v) |
| if(DbvChromaFlag) { | |
| Candidate_idx | unary() or ae(v) |
| if (hasChromaFusionFlag() ) | |
| fusionOtherModeFlag | ae(v) |
| } | |
| } | |

[Table 9]

| Coding unit syntax | Descriptor |
|---|---|
| ... | |
| if ( hasChromaBvFlag() ) | |
| { | |
| DbvChromaFlag | ae(v) |

(continued)

| if(DbvChromaFlag) { | |
|---|---|
| Candidate_idx | unary() or ae(v) |
| } | |
| } | |

Candidate_idx may be index information indicating a candidate BV in a BV candidate list. The BV candidate list may be a rearranged list, and in this case, the image decoding apparatus 200 may perform unary binarization. In the case of a non-rearranged list, the image decoding apparatus 200 may perform ae(v).

## Embodiment 5

The present embodiment relates to a method of effectively generating a chroma prediction block and proposes a method of rearranging candidate BVs. By rearranging a BV candidate list for many candidate BVs, the image encoding apparatus 100 and/or the image decoding apparatus 200 may place a candidate BV indicating a similar position to a current chroma block in a front part of the candidate list and effectively generate a chroma prediction block accordingly.

A method of rearranging a BV candidate list according to the present disclosure may be the same as that described above in embodiment 2. However, according to the present disclosure, when rearrangement is not performed, a first BV (a BV corresponding to a first index) in a BV candidate list may be selected to predict a current chroma block. For example, a case where a BV is stored because a corresponding luma block at a center position of a chroma prediction block is encoded and/or decoded using the intraTMP mode, the IBC mode, etc., may be considered as a condition for utilizing a BV candidate list that has not been rearranged.

As another example, a case where a center position of a corresponding luma block including a corresponding luma position corresponding to a center position of a chroma prediction block is the same as the center position of the chroma prediction block and a BV is stored because the corresponding block (the corresponding luma block) is encoded and/or decoded using the intraTMP mode, the IBC mode, etc., may be considered as a condition for utilizing a BV candidate list that has not been rearranged.

In the case of YUV420, when a center position of a chroma prediction block is (x, y), and a center position of a corresponding luma block including a luma position (2*x, 2*y) corresponding to the center position of the chroma prediction block is (2*x, 2*y) and a BV is stored because the corresponding block (the corresponding luma block) is encoded and/or decoded using the intraTMP mode, the IBC mode, etc., a first BV (a BV corresponding to a first index) in a BV candidate list that has not been rearranged may be selected to predict a chroma block.

When some template areas of reference blocks indicated by multiple candidate BVs in a BV candidate list deviate from a boundary of a picture, a tile, a slice, etc., the template areas of the corresponding reference blocks may be unavailable. In this case, a BV candidate list rearrangement process may not be performed. Therefore, a first BV in the BV candidate list (a BV corresponding to a first index) may be selected to predict a current chroma block.

## Embodiment 6

The present disclosure proposes a method of converting a residual signal derived using a prediction method proposed in the above-described embodiments. The image encoding apparatus 100 and/or the image decoding apparatus 200 may derive an intra mode from a residual signal to use an appropriate transformation kernel, accordingly improving prediction performance.

A currently predicted chroma block may be assumed to be a block encoded and/or decoded using the DBV mode. Alternatively, the currently predicted chroma block may be assumed to be a block generated through the process of embodiment 1.

According to the present disclosure, the image encoding apparatus 100 and/or the image decoding apparatus 200 may derive a specific intra mode by utilizing pixel values in the currently predicted chroma block. The image encoding apparatus 100 and/or the image decoding apparatus 200 may use a transformation kernel for a derived intra mode as a transformation kernel of a chroma residual signal. For example, the image encoding apparatus 100 and/or the image decoding apparatus 200 may calculate a gradient for pixels in the currently predicted chroma block to derive a prediction mode and may select a transformation kernel based on the corresponding mode.

Alternatively, the image encoding apparatus 100 and/or the image decoding apparatus 200 may derive a specific intra mode by utilizing previously reconstructed pixels around the currently predicted chroma block and use a transformation kernel for the intra mode as a transformation kernel of a chroma residual signal. Alternatively, the image encoding apparatus 100 and/or the image decoding apparatus 200 may derive a prediction mode by calculating a gradient for previously reconstructed pixels around the currently predicted chroma block and select a transformation kernel based on the mode.

Alternatively, the image encoding apparatus 100 and/or the image decoding apparatus 200 may derive a specific intra mode by utilizing all or some pixel values in a luma block corresponding to the currently predicted chroma block or luma pixel values determined in accordance with a chroma block size and use a transformation kernel for the intra mode as a transformation kernel of a chroma residual signal. For example, the image encoding apparatus 100 and/or the image decoding apparatus 200 may derive a prediction mode by calculating a gradient for pixels in the luma block corresponding to the currently predicted chroma block and select a transformation kernel based on the mode.

Alternatively, the image encoding apparatus 100 and/or the image decoding apparatus 200 may derive a specific intra mode by utilizing previously reconstructed pixels around a luma block corresponding to the currently predicted chroma block and use a transformation kernel for the intra mode as a transformation kernel of a chroma residual signal. For example, the image encoding apparatus 100 and/or the image decoding apparatus 200 may derive a prediction mode by calculating a gradient for previously reconstructed pixels around the luma block corresponding to the currently predicted chroma block and select a transformation kernel based on the mode.

## Embodiment 7

The present disclosure proposes various methods of signaling necessary information in the DBV mode. For example, necessary information in the DBV mode may be signaled as shown in table 10 and table 11 below. Various information included in tables 10 and 11 may be the same as that described above in embodiment 4.

[Table 10]

| Coding unit syntax | Descriptor |
|---|---|
| ... | |
| if ( hasChromaBvFlag() ) | |
| { | |
|     DbvChromaFlag | ae(v) |
|     if(DbvChromaFlag) { | |
|       Candidate_idx | unary() or ae(v) |
|     } | |
| } | |

[Table 11]

| Coding unit syntax | Descriptor |
|---|---|
| ... | |
| if ( hasChromaBvFlag() ) | |
| { | |
|     DbvChromaFlag | ae(v) |
| } | |

A DBV mode flag (e.g., DbvChromaFlag) may be signaled when a corresponding luma block has been encoded and/or decoded using the intraTMP mode or the IBC mode. Alternatively, a DBV mode flag may be signaled when a block adjacent or not adjacent to a current chroma block has been encoded and/or decoded using the intraTMP mode, the IBC mode, or the DBV mode. Here, a specific block position for checking whether a corresponding block has been encoded and/or decoded using the intraTMP mode or the IBC mode may be determined by an agreement between the image encoding apparatus 100 and the image decoding apparatus 200.

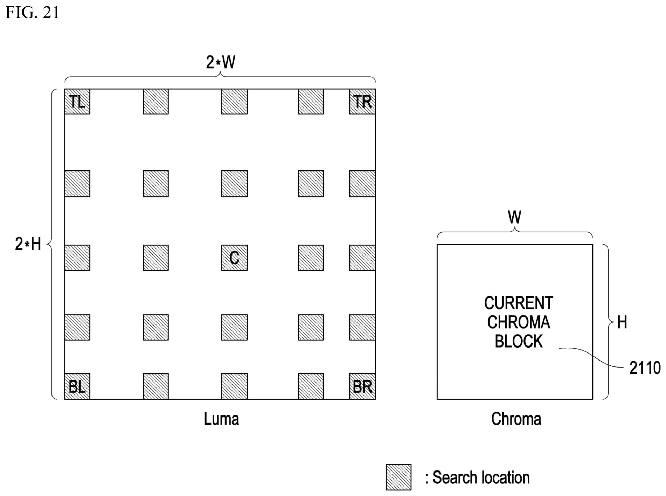

For example, in FIG. 21, when a width and height of a current chroma block 2110 are W and H, it may be determined whether a corresponding luma block at each search location within a 2×W, 2×H size of a luma channel corresponding to the current chroma block 2110 has been encoded or decoded using the intraTMP mode or the IBC mode. Referring to FIG. 21, when a top-left position of a (2×W, 2×H) block is (0, 0), search locations may be as follows.

{(0, 0), (W/4, 0), (W/2, 0), (3×W/4, 0), (W-1, 0),
(0, H/4), (W/4, H/4), (W/2, H/4), (3*W/4, H/4), (W-1, H/4),
(0, H/2), (W/4, H/2), (W/2, H/2), (3*W/4, H/4), (W-1, H/2),
(0, 3×H/4), (W/4, 3×H/4), (W/2, 3×H/4), (3×W/4, 3×H/4), (W-1, 3×H/4),
(0, H-1), (W/4, H-1), (W/2, H-1), (3×W/4, H-1), (W-1, H-1)
}

Alternatively, to signal a DBV mode flag (e.g., DbvChromaFlag), the image encoding apparatus 100 and/or the image decoding apparatus 200 may determine whether the intraTMP mode or the IBC mode has been applied to corresponding luma blocks at some search locations. Alternatively, to signal a DBV mode flag (e.g., DbvChromaFlag), the image encoding apparatus 100 and/or the image decoding apparatus 200 may determine whether the intraTMP mode or the IBV mode has been applied to corresponding luma blocks at different locations within (2×W, 2×H).

Alternatively, to signal a DBV mode flag (e.g., DbvChromaFlag), the image encoding apparatus 100 and/or the image decoding apparatus 200 may determine whether the intraTMP mode or the IBC mode has been applied to corresponding luma blocks at positions outside (2×W, 2×H). Alternatively, to signal a DBV mode flag (e.g., DbvChroma-Flag), the image encoding apparatus 100 and/or the image decoding apparatus 200 may determine whether the intraTMP mode or the IBV mode has been applied to corresponding chroma blocks at positions outside a current chroma block in a chroma channel.

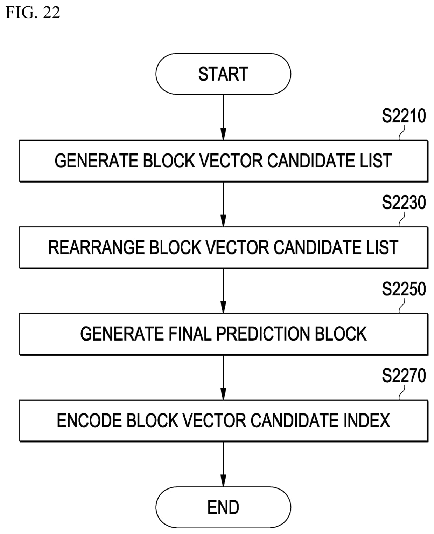

FIG. 22 is a flowchart of an image encoding method according to an embodiment of the present disclosure. The image encoding apparatus 100 may generate a BV candidate list (S2210). In other words, to predict a current chroma block, a BV candidate list for the current chroma block may be generated. The image encoding apparatus 100 may rearrange the BV candidate list generated in operation S2210 (S2230). A method of rearranging a BV candidate list may be the same as the above-described embodiments.

The image encoding apparatus 100 may generate a final prediction block (S2250). In other words, intra prediction may be performed based on one candidate BV included in the rearranged BV candidate list to generate a final prediction block of the current chroma block. Alternatively, intra prediction may be performed based on a plurality of candidate BVs included in the rearranged BV candidate list to generate a plurality of chroma prediction blocks. The image encoding apparatus 100 may generate a final prediction block by calculating a weight sum of the plurality of generated chroma prediction blocks.

The image encoding apparatus 100 may encode a BV candidate index indicating a candidate BV used for generating the final prediction block (S2270). Here, A plurality of candidate BVs may be used for generating the final prediction block, and in this case, a plurality of BV candidate indexes may be encoded. Signaling a BV candidate index may be performed in the same way as described above in embodiment 4 or 7.

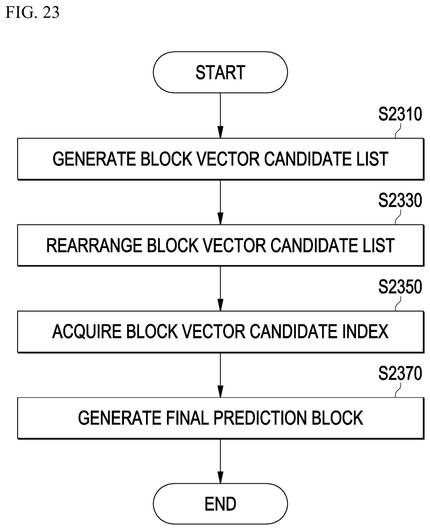

FIG. 23 is a flowchart of an image decoding method according to an embodiment of the present disclosure. The image decoding apparatus 200 may generate a BV candidate list (S2310). In other words, to predict a current chroma block, a BV candidate list for the current chroma block may be generated. The BV candidate list may be generated based on a BV of a luma block corresponding to the current chroma block or BVs of neighboring blocks of the current chroma block. The image decoding apparatus 200 may rearrange the BV candidate list generated in operation S2310 (S2330). A method of rearranging a BV candidate list may be the same as the above-described embodiments

The image decoding apparatus 200 may acquire a BV candidate index (S2350). In other words, the image decoding apparatus 200 may acquire a BV candidate index indicating one candidate BV included in the rearranged BV candidate list. Alternatively, the image decoding apparatus 200 may acquire one or more BV candidate indexes indicating candidate BVs included in the rearranged BV candidate list from a bitstream.

The image decoding apparatus 200 may generate a final prediction block (S2370). In other words, intra prediction may be performed based on a candidate BV indicated by the BV candidate index to generate a final prediction block of the current chroma block. According to the embodiment of the present disclosure, the image decoding apparatus 200 may acquire a plurality of BV candidate indexes. Here, the plurality of BV candidate indexes may include a first index and/or a second index. The image decoding apparatus 200 may generate a first prediction block of the current chroma block based on a first candidate BV indicated by the first index. Also, the image decoding apparatus 200 may generate a second prediction block of the current chroma block based on a second candidate BV indicated by the second index. The image decoding apparatus 200 may generate a final prediction block by calculating a weight sum of the first prediction block and the second prediction block. A method of calculating the weighted sum of the first prediction block and the second prediction block may be the same as the method described above in various embodiments.

According to other embodiments of the present disclosure, the image decoding apparatus 200 may generate a first prediction block of the current chroma block based on the candidate BV indicated by the BV candidate index. Also, the image decoding apparatus 200 may generate a second prediction block of the current chroma block based on a linear model. The image decoding apparatus 200 may generate a final prediction block by calculating a weighted sum of the first prediction block and the second prediction block. A method of calculating the weighted sum of the first prediction block and the second prediction block may be the same as the method described above in various embodiments.

While exemplary methods of the present disclosure are represented as a series of operations for clarity of description, it is not intended to limit the order in which the operations are performed, and the operations may be performed simultaneously or in a different order as necessary. To implement a method according to the present disclosure, the illustrated operations may further include other operations, include remaining operations except for some of the operations, or include other additional operations except for some of the operations.

In the present disclosure, an image encoding apparatus or an image decoding apparatus performing a certain operation (step) may perform an operation (step) of checking execution conditions or circumstances of the operation (step). For example, when it is described that a certain operation is performed upon the satisfaction of a certain condition, the image encoding apparatus or the image decoding apparatus may perform an operation of checking whether the certain condition is satisfied and then perform the certain operation.

Various embodiments of the present disclosure do not disclose a list of all possible combinations and are intended to describe representative aspects of the present disclosure. Matters described in various embodiments may be applied independently or in combination of two or more.

In addition, various embodiments of the present disclosure may be implemented in hardware, firmware, software, or a combination thereof. In the case of hardware implementation, the present disclosure may be implemented by one or more application specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, and the like.

In addition, an image decoding apparatus and an image encoding apparatus to which an embodiment of the present disclosure is applied may be included in a multimedia broadcast transceiver, a mobile communication terminal, a home cinema video device, a digital cinema video device, a surveillance camera, a video chat device, a device for real-time communication such as video communication, a mobile streaming device, a storage medium, a camcorder, a video on demand (VoD) service provision device, an over the top (OTT) video device, an Internet streaming service provision device, a three-dimensional (3D) video device, a videotelephony video device, a medical video device, etc., and may be used for processing video signals or data signals. For example, the OTT video device may include a game console, a Blu-ray player, an Internet access television (TV), a home theater system, a smartphone, a tablet personal computer (PC), a digital video recorder (DVR), and the like.

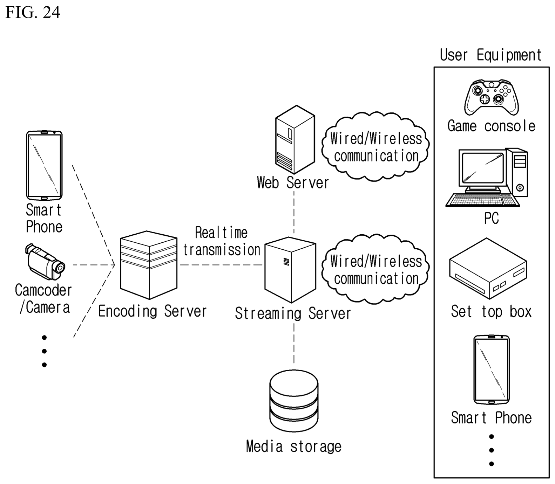

FIG. 24 is a view showing a content streaming system, to which an embodiment of the present disclosure is applicable.

As shown in FIG. 24, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

[Industrial Applicability]

The embodiments of the present disclosure may be used to encode or decode an image.

**Claims**

1. An image decoding method performed by an image decoding apparatus, the image decoding method comprising:

generating a block vector (BV) candidate list for a current chroma block;
rearranging the BV candidate list;
acquiring a BV candidate index indicating one candidate BV included in the rearranged BV candidate list; and
generating a final prediction block of the current chroma block by performing intra prediction based on the candidate BV indicated by the BV candidate index,
wherein the BV candidate list is generated based on a BV of a luma block corresponding to the current chroma block or a BV of a neighboring block of the current chroma block.

2. The image decoding method of claim 1, wherein the BV candidate list is generated by adding one or more luma BVs included in one or more corresponding luma blocks corresponding to the current chroma block in a predetermined order.

3. The image decoding method of claim 2, wherein the luma BVs are included in the BV candidate list based on a predetermined threshold.

4. The image decoding method of claim 2, wherein candidate BVs included in the BV candidate list are values acquired by scaling the luma BVs.

5. The image decoding method of claim 4, further comprising correcting the candidate BV in response to the candidate BV being $(Vx>>1, Vy>>1)$ based on template cost comparison of $(Vx>>1, Vy>>1)$, $((Vx+1)>>1, Vy>>1)$, $(Vx>>1, (Vy+1)>>1)$, and $((Vx+1)>>1, (Vy+1)>>1)$.

6. The image decoding method of claim 1, wherein the rearranging of the BV candidate list is performed based on template costs, and
the template costs are calculated based on a template area of the current chroma block and a template area of a reference block indicated by the candidate BV.

7. The image decoding method of claim 1, wherein the BV candidate index includes at least one of a first index and a second index, and
the generating of the final prediction block comprises:

generating a first prediction block of the current chroma block based on a first candidate BV indicated by the first index;
generating a second prediction block of the current chroma block based on a second candidate BV indicated by the second index; and
generating the final prediction block by calculating a weighted sum of the first prediction block and the second prediction block.

8. The image decoding method of claim 1, wherein the generating of the final prediction block comprises:

generating a first prediction block of the current chroma block based on the candidate BV indicated by the BV candidate index;
generating a second prediction block of the current chroma block based on a linear model; and
generating the final prediction block by calculating a weighted sum of the first prediction block and the second prediction block.

9. An image encoding method performed by an image encoding apparatus, the image encoding method comprising:

generating a block vector (BV) candidate list for a current chroma block;

rearranging the BV candidate list;

generating a final prediction block of the current chroma block by performing intra prediction based on one candidate BV included in the rearranged BV candidate list; and

encoding a BV candidate index indicating the candidate BV used for generating the final prediction block, wherein the BV candidate list is generated based on a BV of a luma block corresponding to the current chroma block or a BV of a neighboring block of the current chroma block.

10. A computer-readable recording medium storing a bitstream generated using the image encoding method of claim 9.

11. A method of transmitting a bitstream generated using an image encoding method, wherein the image encoding method comprises:

generating a block vector (BV) candidate list for a current chroma block;

rearranging the BV candidate list;

generating a final prediction block of the current chroma block by performing intra prediction based on one candidate BV included in the rearranged BV candidate list; and

encoding a BV candidate index indicating the candidate BV used for generating the final prediction block, wherein the BV candidate list is generated based on a BV of a luma block corresponding to the current chroma block or a BV of a neighboring block of the current chroma block.

FIG. 1

FIG. 2

EP 4 734 516 A1

FIG. 3

EP 4 734 516 A1

FIG. 4

```
                    ┌──────────┐
                    │  START   │
                    └──────────┘
                         │
                         ▼
    ┌────────────────────────────────────────────────┐   S410
    │          PERFORM PREDICTION (DETERMINE INTRA     │
    │  PREDICTION MODE/TYPE, DERIVE NEIGHBORING REFERENCE │
    │   SAMPLES, AND GENERATE PREDICTION SAMPLES)      │
    └────────────────────────────────────────────────┘
                         │
                         ▼
    ┌────────────────────────────────────────────────┐   S420
    │     RESIDUAL PROCESSING (DERIVE RESIDUAL SAMPLES │
    │          BASED ON PREDICTION SAMPLES)            │
    └────────────────────────────────────────────────┘
                         │
                         ▼
    ┌────────────────────────────────────────────────┐   S430
    │  ENCODE IMAGE/VIDEO INFORMATION INCLUDING PREDICTION │
    │      INFORMATION AND RESIDUAL INFORMATION        │
    └────────────────────────────────────────────────┘
                         │
                         ▼
                    ┌──────────┐
                    │   END    │
                    └──────────┘
```

FIG. 5

INTRA PREDICTION UNIT

FIG. 6

START

S610
DETERMINE INTRA PREDICTION MODE/TYPE FOR CURRENT BLOCK BASED ON RECEIVED PREDICTION INFORMATION

S620
DERIVE NEIGHBORING REFERENCE SAMPLES

S630
PERFORM PREDICTION (GENERATE PREDICTION SAMPLES)

S640
DERIVE RESIDUAL SAMPLES BASED ON RESIDUAL INFORMATION

S650
GENERATE RECONSTRUCTED BLOCK/PICTURE BASED ON PREDICTION SAMPLES AND RESIDUAL SAMPLES

END

FIG. 7

265

266

INTRA PREDICTION
MODE/TYPE DETERMINER

INTRA PREDICTION
MODE/TYPE INFORMATION

267

REFERENCE
SAMPLE DERIVER

PREDICTION SAMPLE

RECONSTRUCTED REFERENCE
AREA IN CURRENT PICTURE

268

PREDICTION
SAMPLE DERIVER

INTRA PREDICTION UNIT

FIG. 8

820

830

Matching
block

R2

R3

R4

R1

810

Current block
(PU/CU)

840

FIG. 9

FIG. 10

FIG. 11

LUMA

CHROMA

FIG. 12

START

S1201
SIGNAL DBV (DIRECT BLOCK VECTOR) FLAG

S1203
GENERATE BLOCK VECTOR CANDIDATE LIST

S1205
REARRANGE BLOCK VECTOR CANDIDATE LIST

S1207
ACQUIRE BLOCK VECTOR

S1209
REFINE BLOCK VECTOR

S1211
FUSION FLAG == 1?

YES → S1221
GENERATE CHROMA FUSION PREDICTION BLOCK

NO

S1213
FILTER FLAG == 1?

YES → S1231
CALCULATE FILTER COEFFICIENTS

S1233
GENERATE CHROMA PREDICTION BLOCK BASED ON FILTER

NO

S1215
GENERATE CHROMA PREDICTION BLOCK

S1217
FUSE GENERATED CHROMA PREDICTION BLOCK AND CHROMA PREDICTION BLOCK GENERATED IN ANOTHER MODE

END

FIG. 13

FIG. 14

PADDED
AREA

REFERENCE
TEMPLATE AREA
(1420)

REFERENCE
BLOCK

TEMPLATE AREA OF
CHROMA BLOCK
(1410)

CURRENT
BLOCK

FIG. 15

2*W

Block 1

Block 2

Block 3

Block 4

Block 5

Block 6

Block 7

Block 8

2*H

CORRESPONDING LUMA BLOCK

1530

W

H

CURRENT CHROMA BLOCK

1510

FIG. 16

CURRENT
CHROMA BLOCK

▨ : ADJACENT POSITION (1610)

▨ : NON-ADJACENT POSITION (1630)

FIG. 17

FIG. 18

FIG. 19

Luma channel

Chroma channel

FIG. 20

PADDED AREA

Aᵢ

REFERENCE TEMPLATE AREA (2020)

REFERENCE BLOCK 1

Luma channel

PADDED AREA

Bᵢ

REFERENCE TEMPLATE AREA (2030)

REFERENCE BLOCK 2

Luma channel

Rᵢ

TEMPLATE AREA OF CHROMA BLOCK (2010)

CURRENT CHROMA BLOCK

Chroma channel

FIG. 21

Luma

Chroma

2*W

2*H

TL TR

C

BL BR

W

H

2110

CURRENT
CHROMA
BLOCK

: Search location

FIG. 22

```
                    ┌──────────────┐
                    │    START     │
                    └──────┬───────┘
                           │
                           ▼                      S2210
        ┌────────────────────────────────────────────┐
        │    GENERATE BLOCK VECTOR CANDIDATE LIST     │
        └───────────────────┬────────────────────────┘
                            │
                            ▼                     S2230
        ┌────────────────────────────────────────────┐
        │   REARRANGE BLOCK VECTOR CANDIDATE LIST     │
        └───────────────────┬────────────────────────┘
                            │
                            ▼                     S2250
        ┌────────────────────────────────────────────┐
        │       GENERATE FINAL PREDICTION BLOCK       │
        └───────────────────┬────────────────────────┘
                            │
                            ▼                     S2270
        ┌────────────────────────────────────────────┐
        │   ENCODE BLOCK VECTOR CANDIDATE INDEX       │
        └───────────────────┬────────────────────────┘
                            │
                            ▼
                    ┌──────────────┐
                    │     END      │
                    └──────────────┘
```

FIG. 23

```
                    ┌──────────────┐
                    │    START     │
                    └──────┬───────┘
                           │                        S2310
              ┌────────────▼─────────────────────────┐
              │  GENERATE BLOCK VECTOR CANDIDATE LIST │
              └────────────┬─────────────────────────┘
                           │                        S2330
              ┌────────────▼──────────────────────────┐
              │ REARRANGE BLOCK VECTOR CANDIDATE LIST  │
              └────────────┬──────────────────────────┘
                           │                        S2350
              ┌────────────▼──────────────────────────┐
              │ ACQUIRE BLOCK VECTOR CANDIDATE INDEX   │
              └────────────┬──────────────────────────┘
                           │                        S2370
              ┌────────────▼──────────────────────────┐
              │   GENERATE FINAL PREDICTION BLOCK      │
              └────────────┬──────────────────────────┘
                           │
                    ┌──────▼───────┐
                    │     END      │
                    └──────────────┘
```

FIG. 24

## INTERNATIONAL SEARCH REPORT

| International application No. |
|---|
| **PCT/KR2024/008521** |

### A. CLASSIFICATION OF SUBJECT MATTER

**H04N 19/593**(2014.01)i; **H04N 19/186**(2014.01)i; **H04N 19/88**(2014.01)i; **H04N 19/70**(2014.01)i; **H04N 19/132**(2014.01)i; **H04N 19/11**(2014.01)i; **H04N 19/105**(2014.01)i

According to International Patent Classification (IPC) or to both national classification and IPC

### B. FIELDS SEARCHED

Minimum documentation searched (classification system followed by classification symbols)

H04N 19/593(2014.01); H04N 19/105(2014.01); H04N 19/109(2014.01); H04N 19/11(2014.01); H04N 19/119(2014.01); H04N 19/139(2014.01); H04N 19/157(2014.01); H04N 19/176(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 블록 벡터 후보 리스트(block vector candidate list), 블록 벡터 후보 인덱스(block vector candidate index), 재정렬(realignment), 템플릿 비용(template cost), 크로마 블록(chroma block), 루마 블록(luma block)

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0000635 A (SK TELECOM CO., LTD.) 05 January 2021 (2021-01-05) See paragraphs [0089], [0106]-[0107], [0118], [0223] and [0225]. | 1-11 |
| Y | WO 2019-009498 A1 (LG ELECTRONICS INC.) 10 January 2019 (2019-01-10) See paragraphs [0020] and [0248]-[0249]; and claim 1. | 1-11 |
| Y | KR 10-2023-0065344 A (TENCENT AMERICA LLC) 11 May 2023 (2023-05-11) See paragraphs [0026]-[0027]. | 7-8 |
| A | KR 10-2017-0108110 A (VID SCALE, INC.) 26 September 2017 (2017-09-26) See claims 1-3. | 1-11 |
| A | KR 10-2016-0106616 A (QUALCOMM INCORPORATED) 12 September 2016 (2016-09-12) See claim 1. | 1-11 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 September 2024** | **27 September 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
Information on patent family members

International application No.

**PCT/KR2024/008521**

| Patent document cited in search report | | | Publication date (day/month/year) | Patent family member(s) | | | Publication date (day/month/year) |
|---|---|---|---|---|---|---|---|
| KR | 10-2021-0000635 | A | 05 January 2021 | None | | | |
| WO | 2019-009498 | A1 | 10 January 2019 | US | 11082702 | B2 | 03 August 2021 |
| | | | | US | 2020-0162743 | A1 | 21 May 2020 |
| KR | 10-2023-0065344 | A | 11 May 2023 | CN | 116686291 | A | 01 September 2023 |
| | | | | EP | 4201065 | A1 | 28 June 2023 |
| | | | | EP | 4201065 | A4 | 27 March 2024 |
| | | | | JP | 2024-508459 | A | 27 February 2024 |
| | | | | US | 2023-0106614 | A1 | 06 April 2023 |
| | | | | WO | 2023-059984 | A1 | 13 April 2023 |
| KR | 10-2017-0108110 | A | 26 September 2017 | CN | 107409220 | A | 28 November 2017 |
| | | | | CN | 107409220 | B | 24 July 2020 |
| | | | | EP | 3251350 | A2 | 06 December 2017 |
| | | | | EP | 3251350 | B1 | 19 April 2023 |
| | | | | JP | 2019-165486 | A | 26 September 2019 |
| | | | | JP | 6527949 | B2 | 12 June 2019 |
| | | | | KR | 10-2131142 | B1 | 07 July 2020 |
| | | | | US | 10516882 | B2 | 24 December 2019 |
| | | | | US | 2020-0077087 | A1 | 05 March 2020 |
| | | | | WO | 2016-123398 | A2 | 04 August 2016 |
| | | | | WO | 2016-123398 | A3 | 22 September 2016 |
| KR | 10-2016-0106616 | A | 12 September 2016 | CN | 105874797 | A | 17 August 2016 |
| | | | | CN | 105874797 | B | 14 December 2018 |
| | | | | EP | 3092802 | A1 | 16 November 2016 |
| | | | | EP | 3092802 | B1 | 12 August 2020 |
| | | | | JP | 2017-508345 | A | 23 March 2017 |
| | | | | US | 2015-0195559 | A1 | 09 July 2015 |
| | | | | US | 9883197 | B2 | 30 January 2018 |
| | | | | WO | 2015-106078 | A1 | 16 July 2015 |

Form PCT/ISA/210 (patent family annex) (July 2022)